# EUROPEAN PATENT SPECIFICATION

(11) **EP 3 578 799 B1**
(45) Date of publication and mention of the grant of the patent: **16.06.2021**
(21) Application number: 18775042.7
(22) Date of filing: 20.02.2018
(51) Int. Cl.: F02M 35/104, F02B 31/08, F02B 37/16, F02D 13/02, F02D 23/00, F02M 35/10, F02M 35/112, F02B 27/02

(54) **MULTI-CYLINDER ENGINE AIR-INTAKE DEVICE**
LUFTANSAUGVORRICHTUNG FÜR EINEN MEHRZYLINDRIGEN MOTOR
DISPOSITIF D'ADMISSION D'AIR DE MOTEUR MULTICYLINDRE

(30) Priority: 30.03.2017 JP 2017067681
(43) Date of publication of application: 11.12.2019
(73) Proprietor: Mazda Motor Corporation, Aki-gun, Hiroshima 730-8670 (JP)
(72) Inventor: KATO Jiro, Aki-gun Hiroshima 730-8670 (JP); WASADA Mitsunori, Aki-gun Hiroshima 730-8670 (JP); HIGASHIO Masayoshi, Aki-gun Hiroshima 730-8670 (JP); ASHIKAGA Kensuke, Aki-gun Hiroshima 730-8670 (JP); NAKAMURA Kazuhiro, Aki-gun Hiroshima 730-8670 (JP); KOJIMA Yuji, Aki-gun Hiroshima 730-8670 (JP); EBESU Hidesaku, Aki-gun Hiroshima 730-8670 (JP); KOGA Tatsuya, Aki-gun Hiroshima 730-8670 (JP); HIRATA Toshihiko, Aki-gun Hiroshima 730-8670 (JP)
(74) Representative: Müller-Boré & Partner Patentanwälte PartG mbB
(86) International application number: PCT/JP2018/005870
(87) International publication number: WO 2018/180002

(56) References cited:
- DE-A1- 4 409 247
- DE-A1- 4 409 247
- JP-A- H1 068 361
- JP-A- S5 554 628
- JP-A- H09 125 970
- JP-A- 2000 297 708
- JP-A- 2017 031 964
- US-A- 6 024 066
- US-B2- 6 997 157

## Description

### Technical Field

A technique disclosed herein relates to a multi-cylinder engine.

### Background Art

In PTL 1, as an example of an air intake system for a multi-cylinder engine, an air intake system (an intake manifold) for an inline-three engine that includes: three cylinders arranged in line; and two intake ports for each of the cylinders is disclosed. This air intake system is configured to include: a total of six independent passages (branch pipes), two each of which are connected to corresponding one of the three cylinders; a surge tank (a collection pipe) to which upstream end portions of the six independent passages, which are arranged in line according to an alignment order of the corresponding cylinders, are connected; and two upstream passages (branch pipes), a downstream end portion of each of which is connected to the surge tank, and through which gas is introduced into the surge tank.

It is also disclosed in this PTL 1 that the two upstream passages are connected with a space being interposed therebetween in a cylinder array direction. More specifically, in the air intake system disclosed in PTL 1, one of the two upstream passages is connected to a portion that opposes a section from a first cylinder to a second cylinder, and the other of the two upstream passages is connected to a portion that opposes a section from the second cylinder to a third cylinder. Such connection is advantageous for equally introducing fresh air into each of the cylinders.

### Citation List

### Patent Literature

[PTL 1] JP-A-10-068361

JP 2017 031 964 A discloses a suction device of an engine which includes: a suction manifold that has a suction pipe connected to a suction port of a cylinder head of an engine, a surge tank connected to an upstream side end part of the suction pipe, and a suction introduction pie connected to an upstream side end part of the surge tank; and an EGR gas introduction flow passage configured to guide EGR gas to the suction introduction pipe.

### Summary of Invention

### Technical Problem

By the way, in regard to the engine that includes the two intake ports for each of the cylinders as in PTL 1, there is a case where a swirl control valve (hereinafter referred to as an "SCV") is provided in one of the two intake ports. In this case, when an opening amount of the SCV is reduced, a flow rate of gas that flows through the one intake port is reduced. Thus, it is possible to relatively increase the flow rate through the other intake port. This is advantageous for promoting swirls. In particular, in an operation region on a low-load side where fuel economy performance is prioritized (hereinafter referred to as a "fuel economy region"), mixing of the gas can be promoted by closing the SCV.

In recent years, in such an engine, from perspectives of securing an in-cylinder temperature, a reduction in pump loss, and the like, for example, it is considered to provide a negative overlapping period (hereinafter referred to as "NVO"), which includes exhaust top dead center, and in which both of an intake valve and an exhaust valve are closed across exhaust top dead center, in the above-described fuel economy region. As a result, internal EGR gas is trapped in the cylinder, and closing timing of the intake valve is set in a compression stroke (hereinafter referred to as "delayed closing") according to setting of the NVO, so as to realize a mirror cycle of the delayed closing type.

However, in the case where setting of the NVO and the mirror cycle in the delayed closing type are concurrently adopted, the intake valve remains to be opened immediately after an intake stroke is shifted to the compression stroke. As a result, along with lifting of a piston, the internal EGR gas, which is trapped in the cylinder, is blown back to the intake side. At the time, depending on a layout of the surge tank, the internal EGR gas, which is blown back to the intake side, possibly flows reversely to the surge tank.

As a result of the earnest investigation, the present inventors and the like have found that a difference in an in-cylinder state possibly occurs among the cylinders due to the gas that is blown back to the surge tank.

More specifically, for example, in a case of a four-cylinder engine, it is possible to disperse the gas, which is blown back to the surge tank from a cylinder positioned on an inner side in the cylinder array direction such as the second cylinder or the third cylinder, to both sides in the cylinder array direction. However, the gas, which is blown back from a cylinder positioned at each end in the cylinder array direction such as the first cylinder or a fourth cylinder, cannot be dispersed sufficiently because the gas can only flow toward one side in the cylinder array direction.

Thus, in the surge tank, the gas, which is blown back, is more likely to be accumulated in a space near the upstream end portion of the independent passage, which is connected to the first cylinder or the fourth cylinder, than in a space near the upstream end portion of the independent passage, which is connected to the second cylinder or the third cylinder, due to degraded diffusivity.

Here, in the case where the upstream passage, which is used to introduce the fresh air into the surge tank, is connected to a central portion of the surge tank in the cylinder array direction, for example, and where a channel length from the upstream passage to the upstream end portion of each of the independent passages is considered, the introduction of the fresh air into the cylinders, which are positioned on the inner side in the cylinder array direction, is promoted. On the contrary, the fresh air is less likely to be introduced into the cylinders, which are positioned on both ends in the cylinder array direction, also due to the accumulation of the gas, which is blown back.

As a result, differences in an introduction amount of the fresh air and a ratio of the internal EGR gas to the fresh air occur between the cylinders positioned on the inner side in the cylinder array direction and the cylinders positioned at both of the ends in the cylinder array direction. Such a circumstance is not preferred from a perspective of keeping the uniform in-cylinder state.

To handle such a problem, as disclosed in PTL 1, it is considered to provide the plural upstream passages. When the upstream passages are connected with the space being interposed therebetween in the cylinder array direction, the fresh air can be introduced to the inner side and the end sides of the surge tank in a well-balanced manner, and the gas, which is accumulated on the end sides, can also be pushed away by the introduced fresh air.

However, as a result of the further investigation, the present inventors and the like have noticed that there is room for improvement in a connected position between each of the upstream passages to the surge tank so as to reduce the difference in the in-cylinder state among the cylinders.

For example, in the case where, on an extension line of a specified independent passage, any of the plural upstream passages is connected to the surge tank, the fresh air, which flows in along the extension line, is directly introduced into the cylinder corresponding to such an independent passage. As a result, the introduction amount of the fresh air into the cylinder is relatively increased. Just as described, depending on the connected position of the upstream passage, a difference in the channel length from the upstream passage to the cylinder occurs among the cylinders. Such a circumstance is also not preferred from the perspective of keeping the uniform in-cylinder state.

In order to equalize the introduction amount of the fresh air, it is considered to increase the number of the upstream passages. However, such a measure has a limitation when a layout of the entire engine, and the like are considered.

In the first place, in a case of the engine in which the SCV is disposed, when such a fact that the SCV is closed (that is, the fresh air is not distributed) in the fuel economy region is considered, a relative positional relationship between the upstream passage and the SCV also has to be considered.

A technique disclosed herein has been made in view of such points and therefore has a purpose of reducing a difference in an in-cylinder state in a fuel economy region among cylinders in an air intake system for a multi-cylinder engine configured to include an SCV port.

### Solution to Problem

A technique disclosed herein relates to a multi-cylinder engine as defined in claim 1 that includes: at least three or more of plural cylinders that are arranged in an array; plural intake ports that respectively communicate with the plural cylinders; and an air intake passage that is connected to each of the plural intake ports.

For each of the plural cylinders, the plural intake ports include an SCV port that is configured to reduce a flow rate of flowing gas via a swirl control valve. The air intake passage has: plural independent passages that are respectively connected to the plural intake ports; a surge tank, to which upstream end portions of the plural independent passages are connected so as to be arranged in line according to an alignment order of the corresponding cylinders; and plural upstream passages, a downstream end portion of each of which is connected to the surge tank, and each of which introduces the gas into said surge tank.

The plural upstream passages are arranged with a space being interposed therebetween in a cylinder array direction, and, when the surge tank is seen in a cylinder axis direction, the plural upstream passages are connected to the surge tank on extension lines, each of which extends from the upstream end portion of the independent passage connected to the SCV port to an opposite side to the plural cylinders.

Here, the SCV ports have a configuration that the swirl control valve (hereinafter referred to as "SCV") is disposed in the intake port itself or have a configuration that the SCV is disposed in the independent passage connected to the intake port.

For example, in a low-load operation region where fuel economy performance is prioritized (hereinafter referred to as a "fuel economy region"), mixing of the gas can be promoted by closing the SCV.

In such an engine, for example, in the case where trapping of internal EGR gas and delayed closing of an intake valve are performed simultaneously, the internal EGR gas, which is blown back in a compression stroke, possibly flows reversely into the surge tank via the intake port and is possibly accumulated on both ends (more specifically, both ends in the cylinder array direction) of the surge tank.

According to the configuration, the plural upstream passages are provided as in PTL 1. The upstream passages are connected with the space being interposed therebetween in the cylinder array direction. Thus, for example, compared to a configuration that the single upstream passage is connected to a central portion of the surge tank in the cylinder array direction, fresh air can be introduced to an inner side and end sides of the surge tank in a well-balanced manner. In addition, the internal EGR gas, which is accumulated on the end sides, can also be pushed away by the introduced fresh air.

Furthermore, according to the configuration, when the surge tank is seen in the cylinder axis direction, a connected position between each of the upstream passages and the surge tank is arranged the extension line, which extends from the upstream end portion of the independent passage connected to the SCV port to the opposite side to each of the cylinders.

With such arrangement, the gas, which is introduced into the surge tank from the upstream passage, attempts to flow along the above-described extension line. However, since the SCV, which is closed in the fuel economy region, serves as a wall, the gas is suctioned into the intake ports, each of which is positioned adjacent to the SCV port (more specifically, the other intake port in the cylinder connected to such an SCV port, or the intake port in the adjacent cylinder to the cylinder connected to such an SCV port). Accordingly, differing from a configuration of connection on an extension line from the normal intake port, which is not the SCV port, the fresh air does not directly flow into the normal intake port. As a result, channel lengths from the upstream passages to each of the cylinders can be set to be substantially the same among the cylinders. Therefore, it is possible to reduce an introduction amount of the gas and a difference in an in-cylinder state among the cylinders.

The multi-cylinder engine may be configured as an inline four-cylinder engine in which the plural intake ports provided for each of the plural cylinders are two. For each of the plural cylinders, the plural intake ports may include a first port and a second port that is adjacent to said first port in the cylinder array direction and is configured as the SCV port. In the case where the plural cylinders are referred to as a first cylinder, a second cylinder, a third cylinder, and a fourth cylinder from one side in the cylinder array direction, the first port and the second port may be arranged in alignment in the same order in any of the first cylinder, the second cylinder, the third cylinder, and the fourth cylinder. When the surge tank is seen in the cylinder axis direction, the plural upstream passages may have: a first upstream passage connected to the surge tank on the extension line that extends from the upstream end portion of the independent passage connected to the second port of one of the second cylinder and the third cylinder, in which said second port is arranged on an outer side in the cylinder array direction, to the opposite side to the plural cylinders; and a second upstream passage connected to the surge tank on the extension line that extends from the upstream end portion of the independent passage connected to the second port of one of the first cylinder and the fourth cylinder, in which said second port is arranged on an inner side in the cylinder array direction, to the opposite side to the plural cylinders.

This configuration includes both of a case where the first port and the second port are arranged in alignment in this order in the direction from the first cylinder side toward the fourth cylinder side in the cylinder array direction and a case where the second port and the first port are arranged in alignment in this order in the same direction.

For example, in the case of the latter arrangement, while the first upstream passage is arranged on the extension line (a first extension line) extending from the independent passage connected to the second port of the second cylinder, the second upstream passage is arranged on the extension line (a second extension line) extending from the independent passage connected to the second port of the fourth cylinder. In this case, in the fuel economy region, the gas, which is introduced into the surge tank from the first upstream passage, collides with the SCV, which closes the second port of the second cylinder, and is thereafter mainly suctioned into the first port of the first cylinder and the first port of the second cylinder. Meanwhile, the gas, which is introduced into the surge tank from the second upstream passage, is mainly suctioned into the third cylinder and the fourth cylinder.

For example, the first upstream passage is arranged on the extension line relating not to the second port of the second cylinder but to the second port of the first cylinder. In such a case, when the alignment of the first port and the second port is considered, a channel length from the first upstream passage to the first port of the second cylinder is longer than a channel length from the upstream passage to the first port of the first cylinder due to the second port of the second cylinder being held therebetween in the cylinder array direction.

Meanwhile, in the above configuration, the first port of the second cylinder and the first port of the first cylinder are adjacent to each other with the second port of the second cylinder being interposed therebetween. Thus, when the first upstream passage is arranged on the extension line relating to the second port of the second cylinder, it is possible to reduce a difference between a channel length from the first upstream passage to the first port of the first cylinder and a channel length from the first upstream passage to the first port of the second cylinder. The same applies to the second upstream passage.

In the above configuration, in each of the cylinders, since the first port and the second port are aligned in the same order. Thus, for example, it is possible for all of the four cylinders to have the same attachment structure of components such as an injector and an ignition plug.

The multi-cylinder engine may be configured as an inline four-cylinder engine in which the plural intake ports provided for each of the plural cylinders are two. For each of the plural cylinders, the plural intake ports may include a first port and a second port that is adjacent to said first port in the cylinder array direction and is configured as the SCV port. In the case where the plural cylinders are referred to as a first cylinder, a second cylinder, a third cylinder, and a fourth cylinder from one side in the cylinder array direction, while the first port and the second port are arranged in alignment in an order of the first port and the second port in the first cylinder and the second cylinder, the first port and the second port may be arranged in alignment in an order of the second port and the first port in the third cylinder and the fourth cylinder. When the surge tank is seen in the cylinder axis direction, the plural upstream passages may have: a first upstream passage connected to the surge tank on the extension line that extends from the upstream end portion of the independent passage connected to the second port corresponding to the first cylinder to the opposite side to the plural cylinders; and a second upstream passage connected to the surge tank on the extension line that extends from the upstream end portion of the independent passage connected to the second port corresponding to the fourth cylinder to the opposite side to the plural cylinders.

According to this configuration, in the fuel economy region, the gas, which is introduced into the surge tank from the first upstream passage, collides with the SCV, which closes the second port of the first cylinder, and is thereafter mainly suctioned into the first port of the first cylinder and the first port of the second cylinder. Meanwhile, the gas, which is introduced into the surge tank from the second upstream passage, is mainly suctioned into the third cylinder and the fourth cylinder.

In the above configuration, the first port of the second cylinder and the first port of the first cylinder are adjacent to each other with the second port of the first cylinder being interposed therebetween. Thus, when the first upstream passage is arranged on the extension line relating to the second port of the first cylinder, it is possible to reduce a difference between a channel length from the first upstream passage to the first port of the first cylinder and a channel length from the first upstream passage to the first port of the second cylinder. The same applies to the second upstream passage.

In addition, connected portions between the surge tank and the first and second upstream passages are symmetrical about a straight line that is orthogonal to the cylinder array direction. Thus, it is possible to suppress variations in the in-cylinder state between a side of the first cylinder and the second cylinder and a side of the third cylinder and the fourth cylinder.

The multi-cylinder engine may further include: plural intake valves that respectively open/close the plural intake ports; plural exhaust ports that respectively communicate with the plural cylinders; plural exhaust valves that respectively open/close the plural exhaust ports; and a variable valve mechanism that changes valve opening timing and valve closing timing of at least one of the intake valve and the exhaust valve. The variable valve mechanism may be configured to provide a negative overlapping period, in which both of the intake valve and the exhaust valve are closed across exhaust top dead center, and set the valve closing timing of the plural intake valves in a compression stroke when an operation state of the multi-cylinder engine is in a specified operation region.

By providing the negative overlapping period, the internal EGR gas can be trapped in the cylinder. As described above, in the case where such trapping and delayed closing of the intake valve are performed simultaneously, the internal EGR gas, which is blown back in the compression stroke, possibly flows reversely into the surge tank via the intake port and is possibly accumulated on both of the ends (more specifically, both of the ends in the cylinder array direction) of the surge tank.

The above configuration is especially effective when such a possibility is concerned.

The multi-cylinder engine may include a supercharger configured to supercharge the gas to be introduced into each of the plural cylinders in the operation region on a higher-load side than a specified load. The air intake passage may have a supercharging passage, in which the supercharger is provided, and a downstream end portion of which is connected to the surge tank via an introduction port. The introduction port may be opened to a central portion of the surge tank in the cylinder array direction, and is formed to have a larger diameter than the intake port. The air intake passage may be provided with a bypass passage that bypasses the supercharger and reaches the surge tank when the operation state of the multi-cylinder engine is in the operation region on a lower-load side than the specified load. The plural upstream passages may constitute the bypass passage.

In low-load to mid-load operation regions including the above-described fuel economy region, an influence of blowing back of the gas becomes relatively significant due to the small introduction amount of the fresh air. In such operation regions, natural aspiration by the bypass passage is achieved. Thus, when the bypass passage is constructed of the above-described upstream passages, it is possible to reduce the difference in the in-cylinder state among the cylinders, which is caused by blowing back of the gas.

On the contrary, in the high-load operation region, the influence of blowing back of the gas becomes relatively small due to the large introduction amount of the fresh air. In such an operation region, supercharging by using the supercharging passage is achieved. Due to the small influence of blowing back of the gas, the supercharging passage can have a simple layout.

### Advantageous Effects of Invention

As it has been described so far, according to the multi-cylinder engine, it is possible to reduce the difference in the in-cylinder state among the cylinders in the fuel economy region.

### Brief Description of Drawings

[Fig. 1] Fig. 1 is a schematic view for exemplifying a configuration of a multi-cylinder engine.
[Fig. 2] Fig. 2 is a perspective view of the configuration of the multi-cylinder engine in which some components are not illustrated.
[Fig. 3] Fig. 3 is a plan view for schematically illustrating a configuration around four cylinders.
[Fig. 4] Fig. 4 is a perspective view of an overall configuration of an air intake system that is seen from the front.
[Fig. 5] Fig. 5 is a perspective view of the overall configuration of the air intake system that is seen from the rear.
[Fig. 6] Fig. 6 is a transverse cross-sectional view of a passage structure on a supercharger side.
[Fig. 7] Fig. 7 is a vertical cross-sectional view of the passage structure on the supercharger side.
[Fig. 8] Fig. 8 is a perspective view of a vertical cross section of a portion around the surge tank.
[Fig. 9] Fig. 9 is a perspective view for illustrating a different vertical cross section from Fig. 8.
[Fig. 10] Fig. 10 is a view of the passage structure relating to a bypass passage that is seen from the front.
[Fig. 11] Fig. 11 is a view of the passage structure relating to the bypass passage that is seen from the rear.
[Fig. 12] Fig. 12 is a view of the passage structure relating to the bypass passage that is seen from above.
[Fig. 13] Fig. 13 is a vertical cross-sectional view of a connection structure of the surge tank and the bypass passage.
[Fig. 14] Fig. 14 is a transverse cross-sectional view of the connection structure of the surge tank and the bypass passage.
[Fig. 15] Fig. 15 is a view of a channel structure around the surge tank that is seen from above.
[Fig. 16] Fig. 16 is a view of a channel structure around the surge tank that is seen from the rear.
[Fig. 17] Fig. 17 is a view for illustrating a modified example of a portion around the surge tank and corresponding to Fig. 15.

### Description of Embodiments

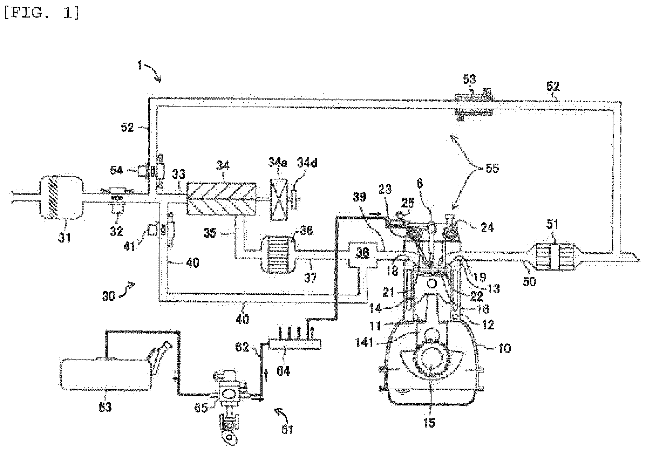

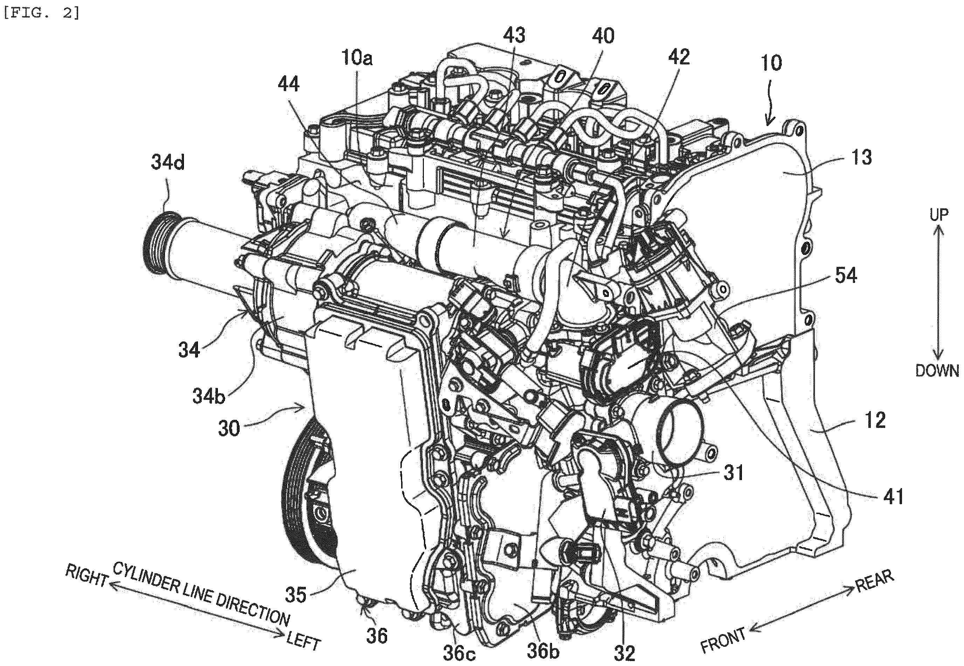

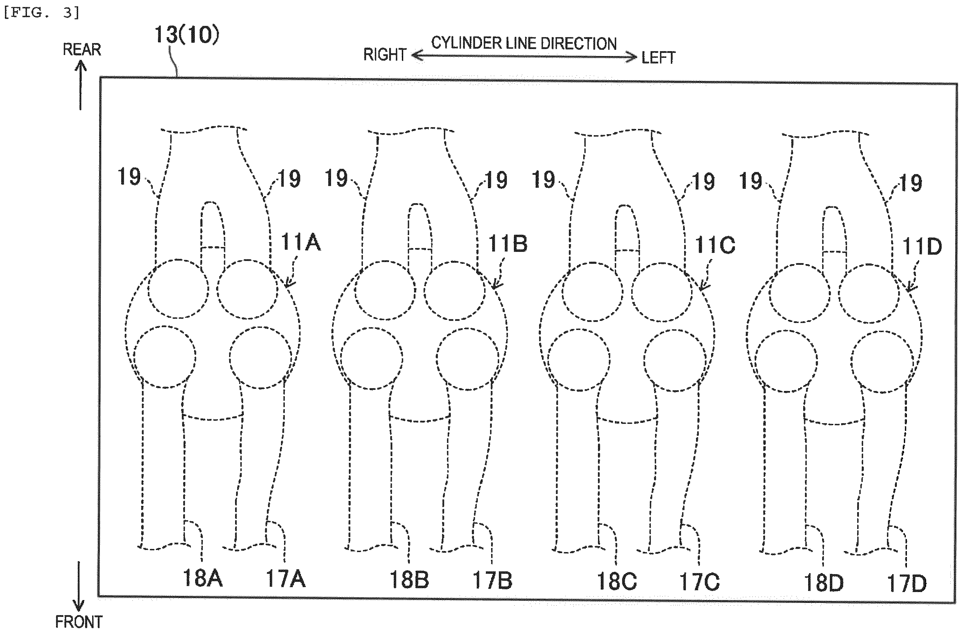

A detailed description will hereinafter be made on an embodiment of an air intake system for a multi-cylinder engine with reference to the drawings. Note that the following description is merely illustrative. Fig. 1 is a view for exemplifying an engine 1 that is configured to include the air intake system for the multi-cylinder engine disclosed herein. Fig. 2 is a perspective view of a configuration of the engine 1 in which some components are not illustrated. Fig. 3 is a plan view for schematically illustrating a configuration around four cylinders 11.

The engine 1 is a gasoline engine (in particular, a four-stroke internal combustion engine) that is mounted on a vehicle with an FF layout, and, as illustrated in Fig. 1, is configured to include a mechanically-driven supercharger (a so-called supercharger) 34.

In addition, as illustrated in Fig. 3, the engine 1 according to this embodiment is configured as a so-called transversely-mounted, inline four-cylinder engine that includes the four cylinders (cylinders) 11 arranged in line and in which the four cylinders 11 are mounted in a posture of being aligned along a vehicle width direction. Accordingly, in this embodiment, an engine longitudinal direction as an arrangement direction of the four cylinders 11 (a cylinder array direction) substantially matches the vehicle width direction, and an engine width direction substantially matches a vehicle longitudinal direction.

Unless otherwise noted, a front side indicates one side in the engine width direction (a front side in the vehicle longitudinal direction), a rear side indicates the other side in the engine width direction (a rear side in the vehicle longitudinal direction), a left side indicates one side in the engine longitudinal direction (the cylinder array direction) (a left side in the vehicle width direction and an engine-front side), and a right side indicates the other side in the engine longitudinal direction (the cylinder array direction) (a right side in the vehicle width direction and an engine-rear side).

In addition, in the following description, an upper side indicates an upper side in a state where the engine 1 is mounted on the vehicle (hereinafter also referred to as a "vehicle-mounted state"), and a lower side indicates a lower side in the vehicle-mounted state.

### (Schematic Configuration of Engine)

The engine 1 is configured as a front-intake, rear-exhaust type. More specifically, as illustrated in Fig. 3, the engine 1 includes: an engine body 10 having the four cylinders 11 (only one cylinder is illustrated in Fig. 1); an air intake passage 30 that is arranged on the front side of the engine body 10 and communicates with each of the cylinders 11 via intake ports 17, 18; and an exhaust passage 50 that is arranged on the rear side of the engine body 10 and communicates with each of the cylinders 11 via an exhaust port 19.

The air intake passage 30 according to this embodiment constitutes the air intake system in which plural passages for guiding gas, devices such as a supercharger 34 and an intercooler 36, and a bypass passage 40 bypassing these devices are combined as a unit.

The engine body 10 is configured to burn air-fuel mixture of the gas and fuel supplied from the air intake passage 30 in each of the cylinders 11 according to a specified combustion order. More specifically, the engine body 10 has a cylinder block 12 and a cylinder head 13 mounted thereon.

The four cylinders 11 are formed in the cylinder block 12. The four cylinders 11 are aligned in a manner to form a line along a center axis direction of a crankshaft 15 (that is, the cylinder array direction). Each of the four cylinders 11 is formed in a cylindrical shape, and a center axis of each of the cylinders 11 (hereinafter referred to as a "cylinder axis") extends in parallel with each other and perpendicularly to the cylinder array direction. Hereinafter, the four cylinders 11 illustrated in Fig. 3 may be referred to as a first cylinder 11A, a second cylinder 11B, a third cylinder 11C, and a fourth cylinder 11D in an order from the right side along the cylinder array direction.

A piston 14 is slidably inserted in each of the cylinders 11. The piston 14 is coupled to the crankshaft 15 via a connecting rod 141. With the cylinder 11 and the cylinder head 13, the piston 14 defines a combustion chamber 16.

A roof surface of the combustion chamber 16 has a so-called pent roof shape, and is constructed by a lower surface of the cylinder head 13. This engine 1 is configured that the roof surface of the combustion chamber 16 is positioned lower than a conventional roof surface so as to increase a geometrical compression ratio. The pent roof shape of the roof surface is almost a flat shape.

In the cylinder head 13, the two intake ports 17, 18 are formed for each of the cylinders 11. Each of the two intake ports 17, 18 communicates with the combustion chamber 16. Each of the cylinders 11 has a first port 17 and a second port 18 that is adjacent to said first port 17 in the cylinder array direction. In any of the first cylinder 11A to the fourth cylinder 11D, the first port 17 and the second port 19 are aligned in the same order. More specifically, as illustrated in Fig. 3, in each of the cylinders 11, the second port 18 and the first port 17 are aligned in an order from the right side along the cylinder array direction.

An upstream end of each of the intake ports 17, 18 is opened to an outer surface (an attachment surface) 10a of the engine body 10, and a downstream end of the air intake passage 30 is connected thereto. Meanwhile, a downstream end of each of the ports 17, 18 is opened to the roof surface of the combustion chamber 16.

Hereinafter, the first port that communicates with the first cylinder 11A may be denoted by a reference sign "17A" instead of "17", and the second port that communicates with said cylinder 11A may be denoted by a reference sign "18A" instead of "18". The same applies to the second cylinder 11B to the fourth cylinder 11D. For example, the second port that communicates with the third cylinder 11C may be denoted by a reference sign "18C" instead of "18".

In addition, for each of the cylinders 11, the two intake ports 17, 18 include a swirl control valve (SCV) port configured such that a flow rate of the flowing gas is restricted via an SCV 80. In this embodiment, the above-described second port 18 is configured as the SCV port.

An intake valve 21 is disposed in each of the two intake ports 17, 18. The intake valve 21 opens/closes a portion between the combustion chamber 16 and each of the intake ports 17, 18. The intake valve 21 opens/closes at specified timing by an intake valve mechanism.

In this configuration example, as illustrated in Fig. 1, the intake valve mechanism has an electric intake variable valve timing (VVT) 23 as a variable valve mechanism. The electric intake VVT 23 is configured to continuously change a rotation phase of an intake cam shaft within a specified angle range. In this way, valve opening timing and valve closing timing of the intake valve 21 are continuously changed. Note that the intake valve mechanism may have a hydraulic VVT instead of the electric WT.

In the cylinder head 13, two exhaust ports 19, 19 are also formed for each of the cylinders 11. Each of the two exhaust ports 19, 19 communicates with the combustion chamber 16.

An exhaust valve 22 is disposed in each of the two exhaust ports 19, 19. The exhaust valve 22 opens/closes a portion between the combustion chamber 16 and each of the exhaust ports 19, 19. The exhaust valve 22 opens/closes at specified timing by an exhaust valve mechanism.

In this configuration example, as illustrated in Fig. 1, the exhaust valve mechanism has an electric exhaust variable valve timing (VVT) 24 as the variable valve mechanism. The electric exhaust VVT 24 is configured to continuously change a rotation phase of an exhaust cam shaft within a specified angle range. In this way, valve opening timing and valve closing timing of the exhaust valve 22 are continuously changed. Note that the exhaust valve mechanism may have the hydraulic VVT instead of the electric WT.

Although a detailed description will not be made, in this engine 1, duration of an overlapping period relating to the valve opening timing of the intake valve 21 and the valve closing timing of the exhaust valve 22 is adjusted by the electric intake VVT 23 and the electric exhaust VVT 24. In this way, residual gas in the combustion chamber 16 is eliminated, and hot burnt gas is confined in the combustion chamber 16 (that is, internal exhaust gas recirculation (EGR) gas is introduced into the combustion chamber 16). In this configuration example, the electric intake VVT 23 and the electric exhaust VVT 24 constitute an internal EGR system. Note that the internal EGR system is not limited to be constructed of the VVTs.

In the cylinder head 13, an injector 6 is attached to each of the cylinders 11. In this configuration example, the injector 6 is a fuel injection valve of a multiple nozzle hole type, and is configured to directly inject the fuel into the combustion chamber 16.

A fuel supply system 61 is connected to the injector 6. The fuel supply system 61 includes: a fuel tank 63 configured to store the fuel; and a fuel supply passage 62 that couples the fuel tank 63 and the injector 6 to each other. A fuel pump 65 and a common rail 64 are provided in the fuel supply passage 62. The fuel pump 65 pressure-feeds the fuel to the common rail 64. In this configuration example, the fuel pump 65 is a plunger pump that is driven by the crankshaft 15. The common rail 64 is configured to store the fuel, which is pressure-fed from the fuel pump 65, at a high fuel pressure. When the injector 6 is opened, the fuel, which is stored in the common rail 64, is injected into the combustion chamber 16 from each of the nozzle holes of the injector 6.

In the cylinder head 13, an ignition plug 25 is attached to each of the cylinders 11. The ignition plug 25 is attached in such a posture that a tip thereof faces inside of the combustion chamber 16, and forcibly ignites the air-fuel mixture in the combustion chamber 16.

As illustrated in Fig. 2, the air intake passage 30 is connected to a side surface (hereinafter referred to as the "attachment surface") 10a on the front side of the engine body 10, and communicates with the intake ports 17, 18 of each of the cylinders 11. The air intake passage 30 is a passage through which the gas to be introduced into the combustion chamber 16 flows. An air cleaner 31 that filters fresh air is disposed in an upstream end portion of the air intake passage 30. A surge tank 38 is disposed near the downstream end of the air intake passage 30. As illustrated in Fig. 3, a portion of the air intake passage 30 on a downstream side of the surge tank 38 is branched into two for each of the cylinders 11 and thereby constitutes independent passages 39.

Although a detailed description will be made later, one of the two independent passages 39 is connected to the first port 17, and the other is connected to the second port 18. Hereinafter, the former independent passage 39 may be denoted by a reference sign "391" while the latter may be denoted by a reference sign "392". Just as described, downstream ends of the independent passages 39 are respectively connected to the intake ports 17, 18 of each of the cylinders 11.

In the air intake passage 30, a throttle valve 32 is disposed between the air cleaner 31 and the surge tank 38. The throttle valve 32 is configured to adjust an opening amount thereof so as to adjust an amount of the fresh air to be introduced into the combustion chamber 16.

In addition, in the air intake passage 30, the supercharger 34 is disposed on a downstream side of the throttle valve 32. The supercharger 34 is configured to supercharge the gas to be introduced into the combustion chamber 16. In this configuration example, the supercharger 34 is a mechanical supercharger that is driven by the engine 1. Although the supercharger 34 according to this embodiment is configured as a Roots-type supercharger, the supercharger 34 can adopt any configuration. For example, the supercharger 34 may be of a Lysholm type or a centrifugal type.

An electromagnetic clutch 34a is interposed between the supercharger 34 and the engine 1. The electromagnetic clutch 34a transmits drive power from the engine 1 to the supercharger 34 or blocks the transmission of the drive power from the engine 1 to the supercharger 34. The supercharger 34 is switched between on and off when unillustrated control means such as an engine control unit (ECU) switches disengagement and engagement of the electromagnetic clutch 34a. That is, this engine 1 is configured to be switchable between operation for supercharging the gas to be introduced into the combustion chamber 16 and operation for not supercharging the gas to be introduced into the combustion chamber 16 by switching on and off of the supercharger 34.

The intercooler 36 is disposed on a downstream side of the supercharger 34 in the air intake passage 30. The intercooler 36 is configured to cool the gas that is compressed in the supercharger 34. The intercooler 36 in this configuration example is configured as a water-cooling type.

As a passage that connects various devices incorporated in the air intake passage 30, the air intake passage 30 has: a first passage 33 that is disposed on a downstream side of the air cleaner 31 and through which intake air cleaned by the air cleaner 31 is guided to the supercharger 34; a second passage 35 through which the intake air compressed by the supercharger 34 is guided to the intercooler 36; and a third passage 37 through which the gas cooled by the intercooler 36 is guided to the surge tank 38. Note that, in order to shorten a channel length (a runner length) from the surge tank 38 to each of the intake ports 17, 18, the surge tank 38 is disposed near an inlet (an upstream end portion) of each of the intake ports 17, 18. Together with the supercharger 34 and the intercooler 36, the second passage 35 and the third passage 37 constitute the "supercharging passage".

The air intake passage 30 is also provided with the bypass passage 40 that bypasses the supercharger 34 and the intercooler 36. The bypass passage 40 connects a portion of the air intake passage 30, which is from the downstream side of the throttle valve 32 to an upstream side of the supercharger 34, and the surge tank 38 to each other. In the bypass passage 40, a bypass valve 41 that is configured to adjust a flow rate of the gas flowing through said bypass passage 40 is disposed.

When the supercharger 34 is turned off (that is, when the electromagnetic clutch 34a is disengaged), the bypass valve 41 is fully opened. In this way, the gas flowing through the air intake passage 30 bypasses the supercharger 34, flows into the surge tank 38, and is introduced into the combustion chamber 16 via the independent passage 39. The engine 1 is operated in a non-supercharged, that is, naturally aspirated state.

When the supercharger 34 is turned on (that is, when the electromagnetic clutch 34a is engaged), an opening amount of the bypass valve 41 is appropriately adjusted. In this way, in the air intake passage 30, the gas that has flowed through the supercharger 34 partially flows through the bypass passage 40 and reversely flows to the upstream side of the supercharger 34. A reverse flow rate can be adjusted by adjusting the opening amount of the bypass valve 41. Thus, a boost pressure of the gas to be introduced into the combustion chamber 16 can be adjusted. In this configuration example, a supercharging system is constructed of the supercharger 34, the bypass passage 40, and the bypass valve 41.

The exhaust passage 50 is connected to a side surface on the rear side of the engine body 10, and communicates with the exhaust port 19 of each of the cylinders 11. The exhaust passage 50 is a passage through which exhaust gas exhausted from the combustion chamber 16 flows. Although detailed illustration is not provided, an upstream portion of the exhaust passage 50 constitutes an independent passage that is branched for each of the cylinders 11. An upstream end of the independent passage is connected to the exhaust port 19 of each of the cylinders 11. In the exhaust passage 50, an exhaust gas purification system having at least one catalytic converter 51 is disposed. The catalytic converter 51 is configured to include a three-way catalyst. Note that the exhaust gas purification system is not limited to the exhaust gas purification system that only includes the three-way catalyst.

An EGR passage 52 that constitutes an external EGR system is connected between the air intake passage 30 and the exhaust passage 50. The EGR passage 52 is a passage for partially recirculating the burnt gas to the air intake passage 30. An upstream end of the EGR passage 52 is connected to a downstream side of the catalytic converter 51 in the exhaust passage 50. A downstream end of the EGR passage 52 is connected to a portion of the air intake passage 30 on the upstream side of the supercharger 34 and an upstream side of an upstream end of the bypass passage 40.

In the EGR passage 52, a water-cooling EGR cooler 53 is disposed. The EGR cooler 53 is configured to cool the burnt gas. In the EGR passage 52, an EGR valve 54 is also disposed. The EGR valve 54 is configured to adjust a flow rate of the burnt gas flowing through the EGR passage 52. A recirculation amount of the cooled burnt gas, that is, external EGR gas can be adjusted by adjusting an opening amount of the EGR valve 54.

In this configuration example, an EGR system 55 is constructed of: the external EGR system configured to include the EGR passage 52 and the EGR valve 54; and the above-described internal EGR system configured to include the electric intake VVT 23 and the electric exhaust VVT 24.

### (Configuration of Air Intake passage)

A detailed description will hereinafter be made on a configuration of the air intake passage 30.

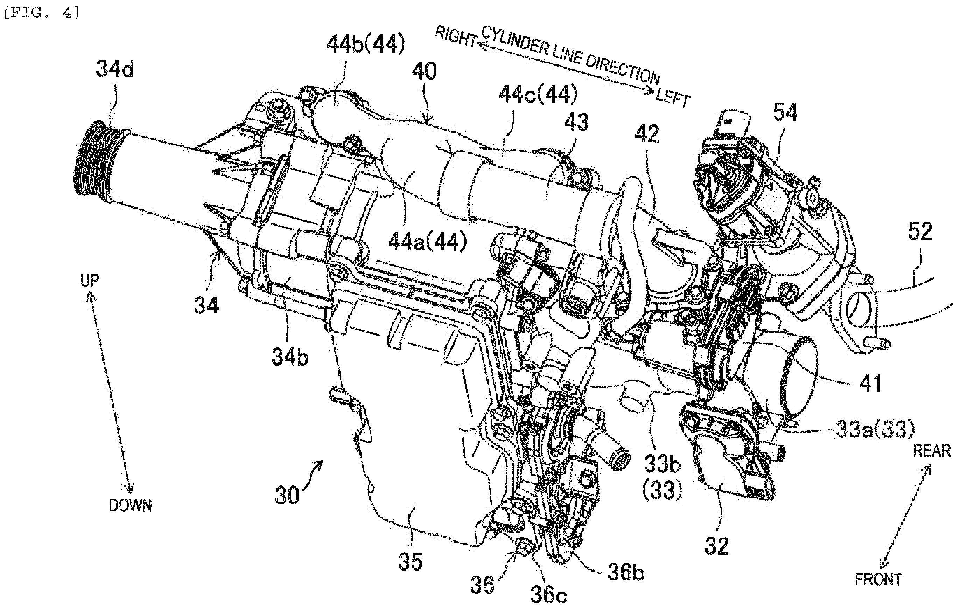

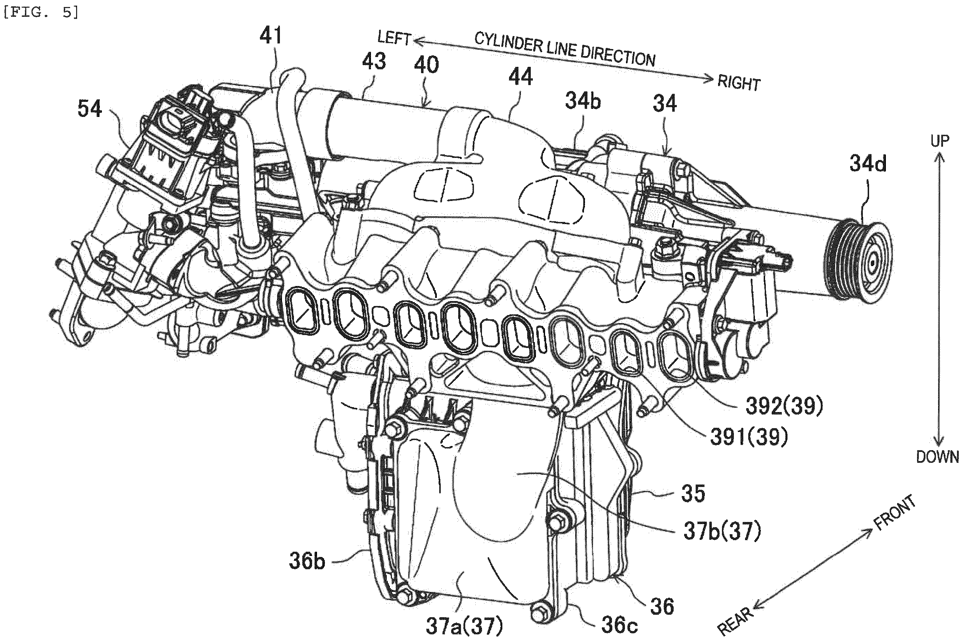

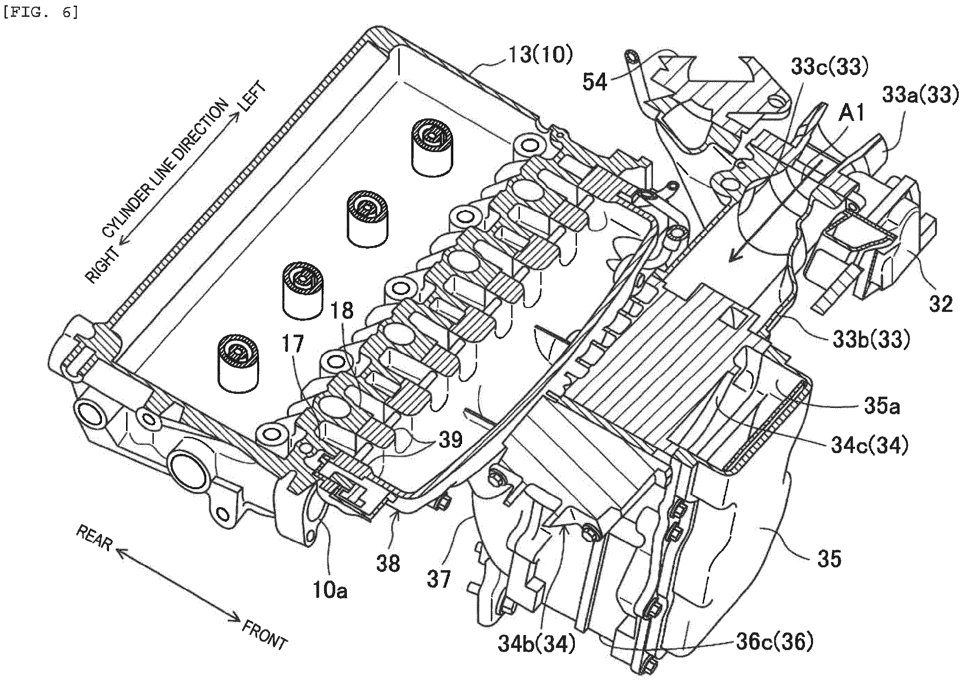

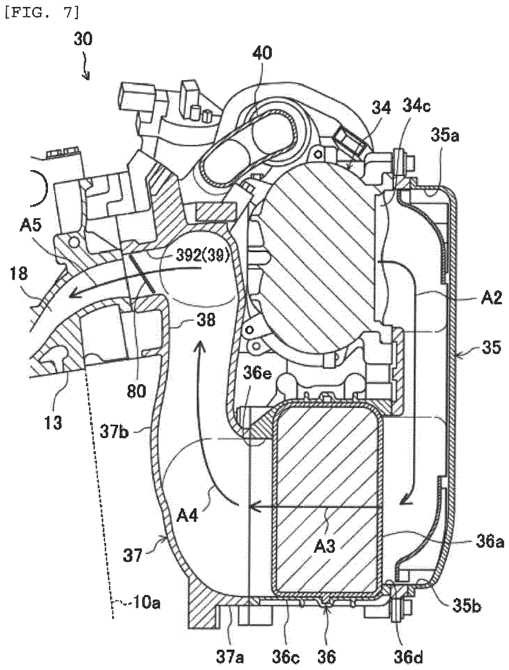

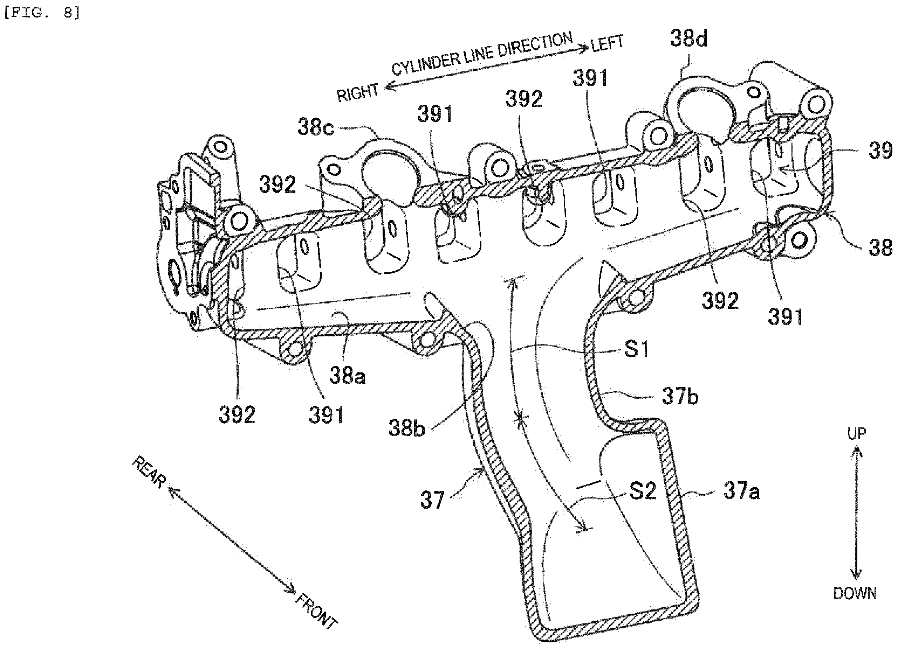

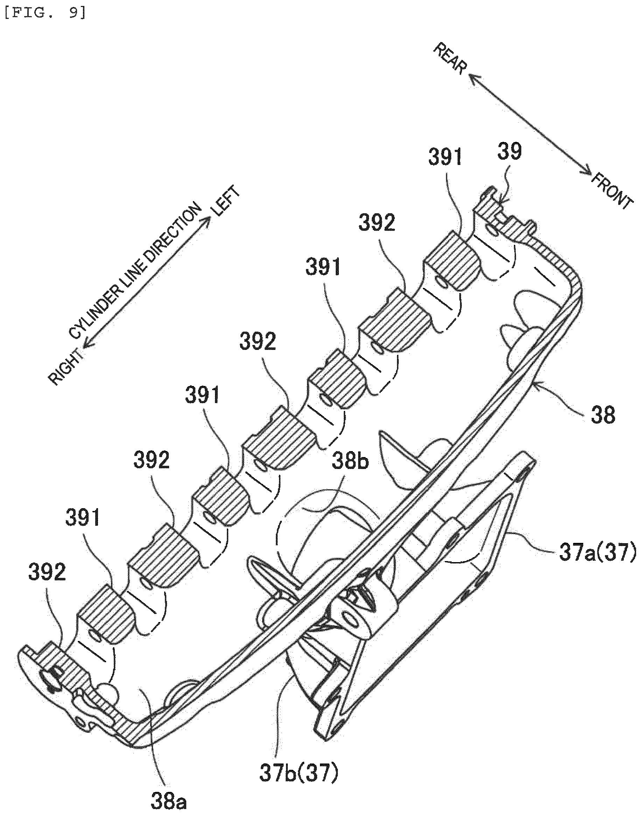

Fig. 4 is a perspective view of the overall configuration of the air intake passage 30 that is unitized and seen from the front. Fig. 5 is a perspective view of the overall configuration of the air intake passage 30 that is seen from the rear. Fig. 6 is a transverse cross-sectional view of a passage structure of the air intake passage 30 on the supercharger side, and Fig. 7 is a vertical cross-sectional view thereof. In addition, Fig. 8 is a perspective view of a vertical cross section of a portion around the surge tank 38, and Fig. 9 is a perspective view for illustrating a different vertical cross section therefrom.

Each portion that constitutes the air intake passage 30 is arranged on the front side of the engine body 10, more specifically, on the front side of the above-described attachment surface 10a. Note that, as illustrated in Fig. 6 to Fig. 7, the attachment surface 10a is constructed of outer surfaces on the front side of the cylinder head 13 and the cylinder block 12.

First, a description will be made on schematic arrangement of each of the portions constituting the air intake passage 30.

As illustrated in Fig. 2 and Fig. 4 to Fig. 8, the supercharger 34 is arranged on an opposite side of the four cylinders 11 from the surge tank 38 in a manner to oppose the four cylinders 11. A clearance (a space) that corresponds to dimensions of the surge tank 38 is provided between a rear surface of the supercharger 34 and the attachment surface 10a. On the left side of the supercharger 34, the first passage 33 extends along the cylinder array direction, and is connected to a left end of the supercharger 34. Meanwhile, the intercooler 36 is arranged below the supercharger 34, and, similar to the supercharger 34, is arranged with a specified space being provided between the intercooler 36 and the attachment surface 10a. The supercharger 34 and the intercooler 36 are vertically adjacent to each other. The second passage 35 extends vertically in a manner to connect a front portion of the supercharger 34 and a front portion of the intercooler 36. The surge tank 38 is arranged in the clearance between the supercharger 34 and the attachment surface 10a, and is arranged on an opposite side of cylinder-opposite-side ends (the inlets) of the intake ports 17, 18 from the plural independent passages 39 in a manner to oppose the opposite side of cylinder-opposite-side ends (the inlets) of the intake ports 17, 18. The third passage 37 extends in a manner to thread through the clearance between the attachment surface 10a and each of the intercooler 36 and the supercharger 34, and connects a rear portion of the intercooler 36 and a bottom portion of the surge tank 38 such that the intercooler 36 is positioned below the surge tank 38. The bypass passage 40 is formed to extend upward from an intermediate portion of the first passage 33 and thereafter extend toward the inside (to the right) of the engine body 10, and is connected to an upper portion of the surge tank 38.

Next, a description will be made on the structure of each of the portions constituting the air intake passage 30.

The first passage 33 is formed in a pipe shape that substantially extends in the cylinder array direction (a lateral direction), and an upstream (left) portion thereof is constructed of a throttle body 33a in which the throttle valve 32 is installed. The throttle body 33a is formed in a short cylinder shape that is made of metal, and, as illustrated in Fig. 4 to Fig. 6, is arranged to be positioned on the left side and the front side of the attachment surface 10a while keeping such a posture that openings at both ends respectively face to the left and right. While the air cleaner 31 is connected to an upstream end (the left end) of the throttle body 33a via an unillustrated passage, a first passage body 33b as a downstream (right) portion of the first passage 33 is connected to a downstream end (the right end) of the throttle body 33a.

As illustrated in Fig. 6, the first passage body 33b is configured to connect the throttle body 33a to the supercharger 34. In detail, the first passage body 33b is configured to have a long cylindrical shape in which openings at both ends respectively face to the left and right. In front of the attachment surface 10a, the first passage body 33b is arranged in a coaxial manner with the throttle body 33a. Further, in detail, the first passage body 33b is formed such that a diameter thereof is gradually increased from the outside to the inside in the cylinder array direction (from the left side to the right side). The downstream end of the throttle body 33a is connected to the upstream end (the left end) of the first passage body 33b as described above while a suction port of the supercharger 34 is connected to the downstream end (the right end) thereof.

In addition, a merging portion 33c where the EGR passage 52 merges is opened in the first passage body 33b. As illustrated in Fig. 6, the merging portion 33c is formed on a rear surface of an upstream portion of the first passage body 33b, and the downstream end of the EGR passage 52 is connected thereto. The merging portion 33c is formed at least on the downstream side of the throttle valve 32.

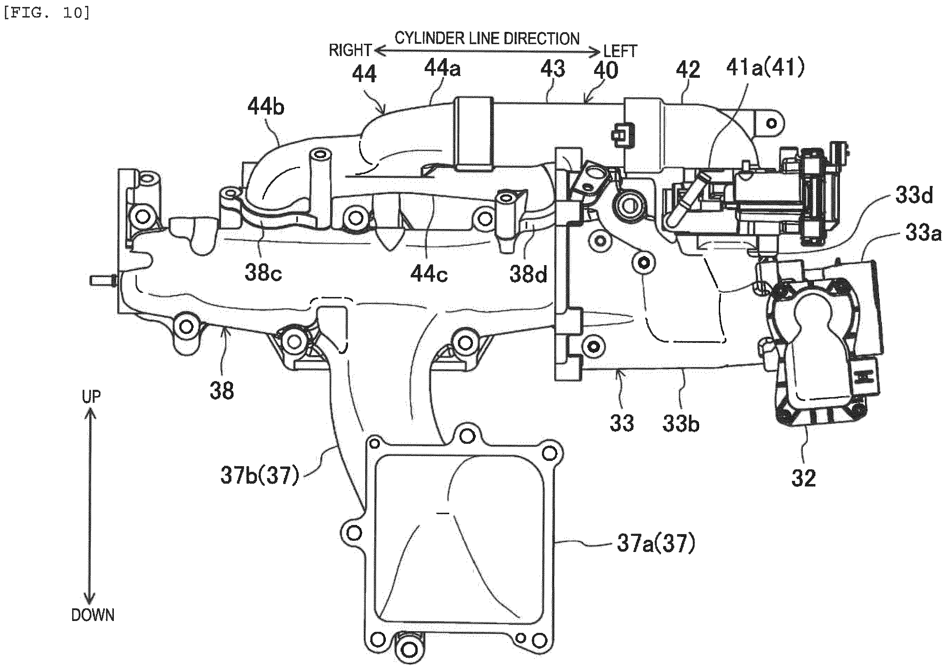

A branched portion 33d that is branched to the bypass passage 40 is also opened in the first passage body 33b. In the first passage body 33b, the branched portion 33d is formed on an upper surface near the merging portion 33c (at the substantially same position in a flow direction of the gas), and is connected to the upstream end of the bypass passage 40 (also see Fig. 10). As illustrated in Fig. 10 and the like, this branched portion 33d is positioned on an outer side (the left side) in the cylinder array direction of the supercharger 34, the intercooler 36, the four pairs of the intake ports 17, 18, and the surge tank 38, which is connected to each of the intake ports 17, 18 via the independent passage 39.

Accordingly, the fresh air, which has been cleaned by the air cleaner 31 and has flowed into the first passage 33, flows through the throttle valve 32, and is thereafter merged into the external EGR gas, which has flowed from the merging portion 33c. Then, during the natural aspiration, the gas, in which the fresh air and the external EGR gas are merged, flows into the bypass passage 40 via the branched portion 33d. Meanwhile, during the supercharging, such gas is suctioned into the supercharger 34 from the downstream end of the first passage body 33b while being merged into the gas that has flowed reversely through the bypass passage 40 (see an arrow A1 in Fig. 6).

A description will hereinafter be made on the passage structure on the supercharger 34 side and the passage structure on the bypass passage 40 side in this order.

### - Passage Structure on Supercharger Side -

First, a detailed description will be made on the passage structure on the suction side of the supercharger 34.

As described above, the supercharger 34 according to this embodiment is configured as the Roots-type supercharger. In detail, the supercharger 34 is coupled to the crankshaft 15 via a pair of rotors (not illustrated) that is provided with a rotational shaft extending along the cylinder array direction, a casing 34b that accommodates the rotors, a drive pulley 34d that rotationally drives the rotors, and a drive belt (not illustrated) that is wound around the drive pulley 34d. The above-described electromagnetic clutch 34a is interposed between the drive pulley 34d and each of the rotors. By switching the electromagnetic clutch 34a between the disengagement and the engagement, the drive power is transmitted to the supercharger 34 via the crankshaft 15, or the transmission of the drive power is blocked.

The casing 34b is formed in a cylindrical shape that extends in the cylinder array direction, and defines an accommodating space for the rotors and a channel in which the gas flows through the supercharger 34. In detail, the casing 34b is formed in the cylindrical shape in which a left end and a front surface are opened in a cylindrical direction. As illustrated in Fig. 6 and the like, the casing 34b is arranged to provide a specified space from a substantially central portion of the attachment surface 10a in the cylinder array direction and be coaxial with the first passage 33.

In a left end portion of the casing 34b in a longitudinal direction, a suction port from which the gas to be compressed by the rotors is opened, and the downstream end (the right end) of the first passage 33 is connected thereto. Meanwhile, as illustrated in Fig. 6 to Fig. 7, in a front portion (a side portion on the opposite side from the engine body 10) of the casing 34b, an outlet 34c from which the compressed gas by the rotors is discharged is opened, and an upstream end (an upper end) of the second passage 35 is connected thereto.

The drive pulley 34d is configured to rotationally drive the rotors that are accommodated in the casing 34b. In detail, the drive pulley 34d is formed in a shaft shape that is projected from a right end of the casing 34b and extends in a substantially coaxial manner with both of the first passage 33 and the casing 34b. The drive belt (not illustrated) is wound around a tip of the drive pulley 34d, and, as described above, the drive pulley 34d is configured to drive and couple the crankshaft 15 to the supercharger 34 according to a switched state of the electromagnetic clutch 34a.

As illustrated in Fig. 4, Fig. 6 to Fig. 7, and the like, the second passage 35 is configured to connect the supercharger 34 to the intercooler 36. In order to arrange the supercharger 34 and the intercooler 36 to be vertically adjacent to each other, the second passage 35 according to this embodiment is formed to extend along a vertical direction of the engine 1. In addition, as illustrated in Fig. 7, both of upper and lower ends of the second passage 35 are opened to the rear (the engine body 10 side). Here, an opening 35a on the upper side is connected to the front portion of the casing 34b (more specifically, the outlet 34c), and an opening 35b on the lower side is connected to the front portion of the intercooler 36 (a front surface of a cooler housing 36c).

In detail, the second passage 35 is formed as a square tube portion that extends in the vertical direction and is flat in the lateral direction, and both of vertical end portions are bent to the rear. That is, as illustrated in Fig. 7, the second passage 35 is configured to form a substantially U-shaped channel when seen in the cylinder array direction (in particular, when seen in the right direction).

As described above, the intercooler 36 according to this embodiment is configured as the water-cooling type and, as illustrated in Fig. 4 to Fig. 7, includes: a core 36a that has a gas cooling function; a core connected portion 36b that is attached to a side portion of the core 36a; and the cooler housing 36c that accommodates the core 36a. Although a detailed description will not be made, a water supply pipe, through which cooling water is supplied to the core 36, and a water discharge pipe, through which the cooling water is discharged from the core 36a, are connected to the core connected portion 36b.

The core 36a is formed in a rectangular parallelepiped shape and is supported in such a posture that one side surface (a rear surface) thereof opposes the attachment surface 10a. While a front surface of the core 36a constitutes a gas inflow surface, the rear surface of the core 36a constitutes a gas outflow surface. Each of these surfaces is the largest surface in the core 36a. Although not shown, plural water tubes, each of which is provided by forming a thin plate material in a flat cylindrical shape, are aligned in the core 36a, and a wavelike corrugated fin is connected to an outer wall surface of each of the water tubes by brazing or the like. With such a configuration, the cooling water, which is supplied from the water supply pipe, is introduced into each of the water tubes so as to cool the high-temperature gas. The cooling water, which is heated by cooling the gas, is discharged from each of the water tubes via the water discharge pipe. In addition, a surface area of each of the water tubes is increased by providing the corrugated fin, which improves a heat radiation effect.

As illustrated in Fig. 4, the core connected portion 36b is a member in a thin rectangular plate shape, and is attached to a right surface of the core 36a. Each of the water supply pipe and the water discharge pipe is connected to the water tubes via the core connected portion 36b. The core connected portion 36b constitutes a right wall portion of the intercooler 36, and defines an accommodating space for the core 36a with the cooler housing 36c.

The cooler housing 36c is arranged below the casing 34b, defines the accommodating space for the core 36a, and constitutes a channel that is interposed between the second passage 35 and the third passage 37 of the air intake passage 30.

More specifically, the cooler housing 36c is formed in a thin rectangular box shape, a front surface and a rear surface of which are opened, and is supported in such a posture that the rear surface thereof opposes the attachment surface 10a at a position below the casing 34b. Similar to the casing 34b, this rear surface is arranged to provide the specified space (see Fig. 7) from the attachment surface 10a of the engine body 10.

In addition, while the downstream end of the second passage 35 is connected to an opening 36d on the front surface side of the cooler housing 36c, the upstream end of the third passage 37 is connected to an opening 36e on the rear surface side. A right surface of the cooler housing 36c is also opened. The opening is configured as an insertion opening that is used when the core 36a is accommodated in the cooler housing 36c, and is closed by the core connected portion 36b.

The third passage 37 is a member that is integrally molded with the surge tank 38 and the independent passages 39, and, as illustrated in Fig. 7 and Fig. 8, is configured to connect the intercooler 36 to the surge tank 38. In detail, the third passage 37 sequentially has, from the upstream side: a collection portion 37a that is fastened to the cooler housing 36c and where the gas that has flowed through the intercooler 36 is collected; and an introduction portion 37b where the collected gas in the collection portion 37a is guided to the surge tank 38. At least in the vehicle-mounted state, the third passage 37 is disposed below the surge tank 38.

The collection portion 37a is formed in a box shape, a front surface side, that is, the cooler housing 36c side of which is opened, and which is longitudinally short. As illustrated in Fig. 7, an opened portion thereof is connected to the opening 36e on the rear surface side of the cooler housing 36c. The collection portion 37a is positioned in the clearance between the rear surface of the cooler housing 36c and the attachment surface 10a of the engine body 10. In addition, an upstream end of the introduction portion 37b is further connected to a rear surface of the collection portion 37a.

The introduction portion 37b is formed as a bent pipe portion that extends in the substantially vertical direction. While the upstream end thereof is connected to the rear surface of the collection portion 37a, a downstream end thereof is connected to a central portion of a surge tank bottom surface (see Fig. 8 to Fig. 9). As illustrated in Fig. 7 and the like, this introduction portion 37b extends in a manner to thread through the clearance between a region from the rear surface of the collection portion 37a to a rear surface of the casing 34b in the supercharger 34 and the attachment surface 10a of the engine body 10.

Further in detail, as illustrated in Fig. 8, the introduction portion 37b is formed such that, while an upstream portion thereof extends obliquely upward to the right from a connected portion to the collection portion 37a, a downstream portion thereof extends vertically upward toward a connected portion to the surge tank 38. As a result of such formation, when seen from the side in the cylinder array direction, a downstream end portion of the introduction portion 37b extends in a substantially orthogonal direction to the flow direction of the gas in the independent passage 39 (see Fig. 7).

The surge tank 38 is formed in a substantially cylindrical shape that extends in the cylinder array direction and both ends of which in the same direction are closed. As described above, this surge tank 38 is arranged on the opposite side of the cylinder-opposite-side ends of the intake ports 17, 18 from the independent passages 39 in the manner to oppose the cylinder-opposite-side ends of the intake ports 17, 18 (see Fig. 7). As will be described later, in the case where each of the plural independent passages 39 is formed in a short cylindrical shape, due to such arrangement, the surge tank 38 is positioned near the inlet (the upstream end portion) of each of the intake ports 17, 18. This is advantageous for reducing the channel length (the runner length) from the surge tank 38 to each of the intake ports 17, 18.

In addition, as illustrated in Fig. 9, the downstream end of the third passage 37 (the introduction portion 37b) is connected to the bottom portion of the surge tank 38. An introduction port 38b that has a substantially circular cross section is opened in a central portion (more specifically, a central portion in the cylinder array direction) of an inner bottom surface 38a of the surge tank 38, and the downstream end portion of the introduction portion 37b is connected to the surge tank 38 via this introduction port 38b.

Note that the introduction port 38b is formed to have a larger diameter than the intake ports 17, 18.

In addition, in the surge tank 38, a dimension from the introduction port 38b to one end in the cylinder array direction (an end on the first cylinder 11A side) is substantially equal to a dimension therefrom to the other end (an end on the fourth cylinder 11D side). With such a configuration, it is possible to secure intake air distribution performance, which is further advantageous for reducing a difference in filling efficiency among the cylinders.

Furthermore, as illustrated in Fig. 9, upstream end portions of the plural independent passages 39 are aligned in line according to the alignment order of the corresponding intake ports 17, 18, and are connected to the surge tank 38.

More specifically, on the side surface (the rear surface) on the engine body 10 side of the surge tank 38, four pairs (that is, the total of eight) of the independent passages 39, two each of which are paired, are formed in a state of being aligned along the cylinder array direction. Each of the eight independent passages 39 is formed as a passage in a short cylindrical shape that extends substantially straight to the rear in the vehicle-mounted state. While one end side (the upstream side) thereof communicates with a space in the surge tank 38, the other end side (the downstream side) thereof is opened to the engine body 10 side (the rear side).

The four pairs of the independent passages 39 are disposed so as to respectively correspond to the four pairs of the intake ports 17, 18. Each of the independent passages 39 and the corresponding pair of the intake ports 17, 18 constitute a single passage when the third passage 37, the surge tank 38, and the independent passages 39, which are integrally formed, are assembled to the engine body 10.

As described above, each unit of the independent passages 39 includes an independent passage 391 corresponding to the first port 17 and an independent passage 392 corresponding to the second port 18. In the case where the third passage 37, the surge tank 38, and the independent passages 39 are assembled to the cylinder block 12, the first port 17 and the corresponding independent passage 391 constitute a single independent passage while the second port 18 and the corresponding independent passage 392 constitute a single independent passage. Just as described, the eight independent passages are constructed.

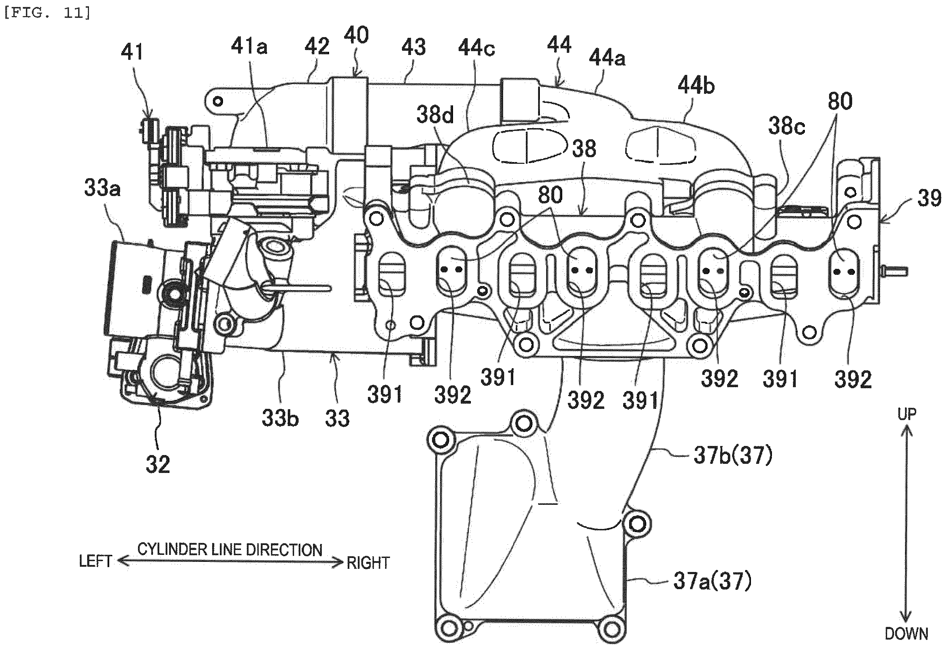

The above-described SCV 80 is disposed in the independent passage 392, which is connected to the second port 18 (see Fig. 7, Fig. 11, and the like). Since the flow rate of the gas flowing through this second port 18 is reduced by reducing the opening amount of the SCV 80, the flow rate of the gas flowing through the other first port 17 can relatively be increased.

By the way, as will be described later, a downstream portion of the bypass passage 40 is branched into two, and a downstream end portion of each of the branched passages (hereinafter referred to as "branched passages" 44b, 44c) is connected to an upper surface of the surge tank 38.

In order to obtain such a structure, the upper surface of the surge tank 38 is provided with two first and second introduction portions 38c, 38d that are arranged with a space being interposed therebetween in the cylinder array direction and are configured to communicate between the inside and the outside of the surge tank 38.

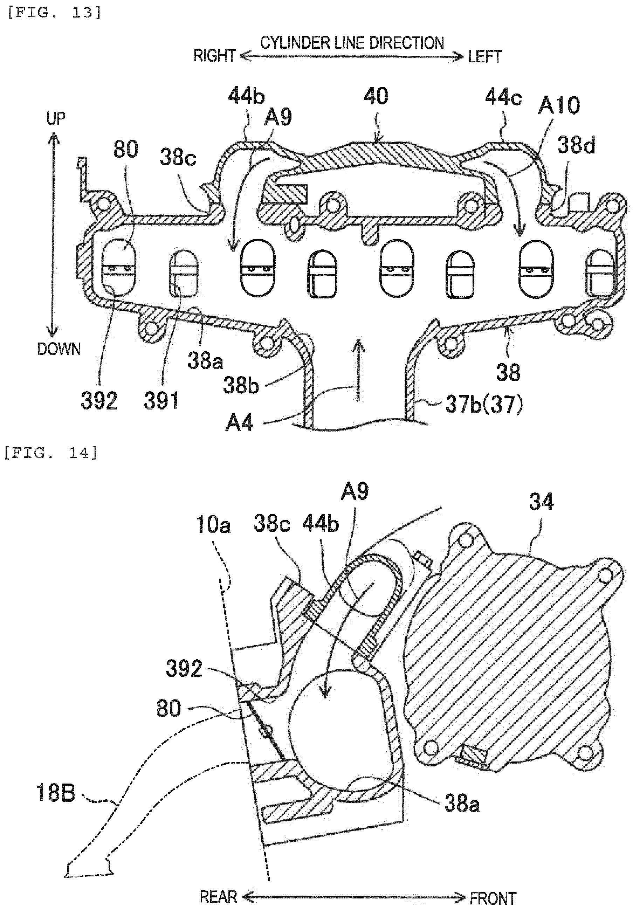

Although a detailed description will be made later, in regard to the two first and second introduction portions 38c, 38d, while the downstream end portion of the one branched passage (hereinafter also referred to as a "first branched passage") 44b is connected to the first introduction portion 38c, which is positioned on one side (the right side) in the cylinder array direction, the downstream end portion of the other branched passage (hereinafter also referred to as a "second branched passage") 44c is connected to the second introduction portion 38d, which is positioned on the other side (the left side) (also see Fig. 13).

More specifically, both of the first and second introduction portions 38c, 38d are formed in short cylindrical shapes and, as illustrated in Fig. 8, extend perpendicularly to the cylinder array direction from the upper surface of the surge tank 38 and obliquely upward to the front.

As illustrated in Fig. 8, the first introduction portion 38c is disposed to oppose a portion near the independent passage 392 that corresponds to the second port 18B of the second cylinder 11B. Meanwhile, the first introduction portion 38d is disposed to oppose a portion near the independent passage 392 that corresponds to the second port 18D of the fourth cylinder 11D. Configurations of the first and second introduction portions 38c, 38d define a connected position between each of the first and second branched passages 44b, 44c and the surge tank 38.

Note that the first and second branched passages 44b, 44c are examples of the "plural upstream passages". In detail, the first branched passage 44b is an example of the "first upstream passage", and the second branched passage 44c is an example of the "second upstream passage".

The gas that is suctioned into the supercharger 34 reaches each of the cylinders 11 via the "supercharging passages" configured as described above.

That is, when the engine 1 is operated, the output from the crankshaft 15 is transmitted via the drive belt and the drive pulley 34d to cause rotation of the rotors during the supercharging. Due to the rotation of the rotors, the supercharger 34 compresses the gas, which is suctioned from the first passage 33, and discharges the compressed gas from the outlet 34c. The discharged gas then flows into the second passage 35, which is arranged in front of the casing 34b.

As indicated by an arrow A2 in Fig. 7, the gas that is discharged from the supercharger 34 and flows into the second passage 35 flows forward from the outlet 34c of the supercharger 34 and then flows downward along the second passage 35. The gas that flows downward reaches a lower portion of the second passage 35 and then flows rearward to the intercooler 36.

Next, as indicated by an arrow A3 in Fig. 7, the gas that flows through the second passage 35 flows into the cooler housing 36c from the opening 36d on the front surface side and flows rearward from the front side. The gas that flows into the cooler housing 36c is cooled by the cooling water, which is supplied to the water tubes, when flowing through the core 36a. The cooled gas flows out of the opening 36e on the rear surface side of the cooler housing 36c and flows into the third passage 37.

Then, as indicated by an arrow A4 in Fig. 7, the gas that flows into the third passage 37 from the intercooler 36 flows through the collection portion 37a, then flows obliquely upward to the right along the upstream portion of the introduction portion 37b (also see a section S1 in Fig. 8), and thereafter flows vertically upward along the downstream portion of the introduction portion 37b (also see a section S2 in Fig. 8). As indicated by an arrow A5 in the same drawing, the gas that flows through the introduction portion 37b flows into the substantially central space of the surge tank 38 in the cylinder array direction, is temporarily stored in the surge tank 38, and is then supplied to each of the cylinders 11 via the independent passages 39.

### - Passage Structure on Bypass Side -

Next, a detailed description will be made on a configuration on the bypass passage 40 side.

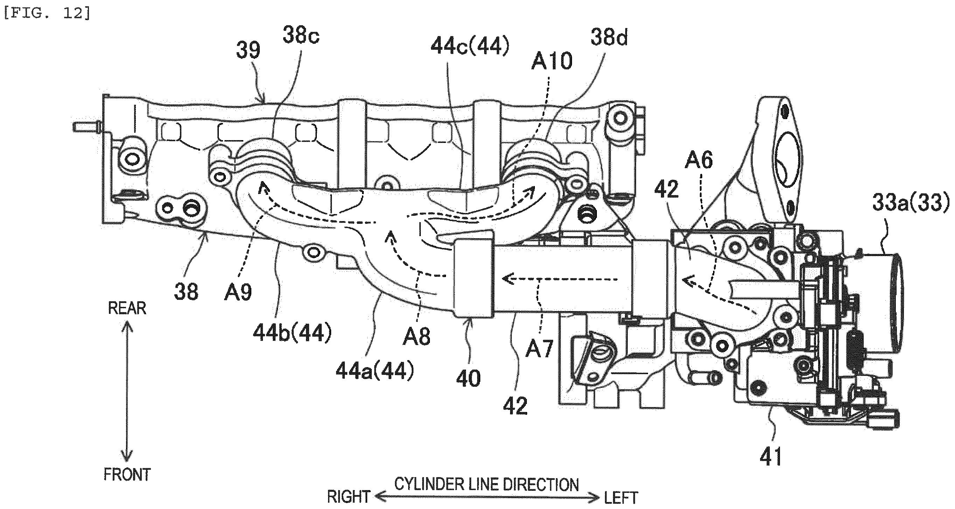

Fig. 10 is a view of a passage structure relating to the bypass passage 40 that is seen from the front, Fig. 11 is a view thereof that is seen from the rear, and Fig. 12 is a view thereof that is seen from above. Fig. 13 is a vertical cross-sectional view of a connection structure of the surge tank 38 and the bypass passage 40, and Fig. 14 is a transverse cross-sectional view thereof.

The bypass passage 40 extends upward from the branched portion 33d of the first passage 33 and then extends substantially linearly to the right. When a portion of the bypass passage 40 that extends rightward reaches near the center (more specifically, the center in the cylinder array direction) of the surge tank 38, the bypass passage 40 changes the direction so as to extend obliquely downward to the rear, and is then branched into two. Each of the branched portions is connected to the upper surface of the surge tank 38.

More specifically, the bypass passage 40 is constructed of, from the upstream side along the flow direction: a valve body 41a in which the bypass valve 41 is installed; a bent pipe portion 42 for adjusting the flow direction of the gas, which has flowed through the valve body 41a; a straight pipe portion 43 for guiding the gas, which has flowed through the bent pipe portion 42, to the right; and a branched pipe portion 44 for guiding the gas, which has flowed through the straight pipe portion 43, obliquely downward to the rear, and then being branched into two and connected to the surge tank 38.

The valve body 41a is formed in a short cylindrical shape, and, as illustrated in Fig. 10 to Fig. 11, is arranged at a position above the first passage 33 and on the left side of the supercharger 34 while keeping such a posture that openings at both ends face to the above and below. In addition, similar to the first passage 33, the valve body 41a is positioned in front of a portion near a left end of the attachment surface 10a. While the branched portion 33d of the first passage 33 is connected to an upstream end (a lower end) of the valve body 41a, an upstream end of the bent pipe portion 42 is connected to a downstream end (an upper end) of the valve body 41a.

The bent pipe portion 42 is configured as a pipe joint in an elbow shape and is arranged at a position above the first passage 33 and the valve body 41a while keeping such a posture that openings thereof face to the below and right. Accordingly, the gas that flows into the bent pipe portion 42 flows in a perpendicular direction to a main stream of the gas in the first passage 33 (vertically upward). Thereafter, the flow direction thereof is changed according to a bent direction of the bent pipe portion 42. As a result, when seen in a cylinder axis direction (see Fig. 12), the gas that flows through the bent pipe portion 42 flows inward from the outer side in the cylinder array direction (rightward from the left side) while flowing slightly rearward. In addition, similar to the first passage 33 and the valve body 41a, the bent pipe portion 42 is positioned in front of the portion near the left end of the attachment surface 10a. As described above, while the downstream end (the upper end) of the valve body 41a is connected to the upstream end (a lower end) of the bent pipe portion 42, an upstream end of the straight pipe portion 43 is connected to a downstream end (a right end) of the bent pipe portion 42.

The straight pipe portion 43 is formed in a long cylindrical shape (more specifically, a cylindrical shape that extends in the direction from the one side (the left side) in the cylinder array direction to the other side (the right side)). Referring back to Fig. 4 to Fig. 5, the straight pipe portion 43 is arranged at a position above the first passage 33 to the supercharger 34 while keeping such a posture that openings at both ends face to the left and right. As described above, while the downstream end (the right end) of the bent pipe portion 42 is connected to the upstream end (a left end) of the straight pipe portion 43, an upstream end of the branched pipe portion 44 is connected to a downstream end (a right end) of the straight pipe portion 43.

The branched pipe portion 44 is constructed of: a bent passage 44a that is bent in the elbow shape; and the two branched passages 44b, 44c that are branched from a downstream end of the bent passage 44a in the form of a single-elimination tournament. The branched pipe portion 44 is arranged at a position above the supercharger 34 to the surge tank 38 while keeping such a posture that an upstream end of the bent passage 44a faces to the left and both of the two branched passages 44b, 44c, which are branched, face to obliquely downward to the rear.

In detail, the bent passage 44a is bent substantially at a right angle so as to extend obliquely downward to the rear from the front side as extending rightward from the left side. As illustrated in Fig. 12, when seen in the cylinder axis direction, a rear end portion of this bent passage 44a is branched in a substantially T-shape into the two branched passages 44b, 44c.

Channel lengths of the two branched passages 44b, 44c are substantially the same, and the first branched passage 44b as the one branched passage, which is branched, extends rightward along the cylinder array direction from a branched portion, and is then bent in a manner to extend obliquely downward to the rear. Meanwhile, the second branched passage 44c as the other branched passage, which is branched, extends leftward along the cylinder array direction from the branched portion, and is then bent in a manner to extend obliquely downward to the rear. As described above, downstream end portions of the two branched passages 44b, 44c are respectively connected to the first introduction portion 38c and the second introduction portion 38d that are formed on the upper surface of the surge tank 38.

During the natural aspiration, the gas that flows into the bypass passage 40 flows through each of the portions 41 to 44 constituting said passage 40 and reaches each of the cylinders 11.

That is, the gas that flows through the throttle valve 32 flows into the valve body 41a of the bypass valve 41 from the intermediate portion of the first passage 33 according to an opening/closing situation of the bypass valve 41.

As indicated by an arrow A6 in Fig. 12, the gas that flows through the valve body 41a and flows into the bent pipe portion 42 flows vertically upward, and then flows rightward while flowing slightly rearward.

Next, as indicated by an arrow A7 in Fig. 12, the gas that flows through the bent pipe portion 42 flows rightward along the straight pipe portion 43 and thereafter flows into the branched pipe portion 44. Then, as indicated by arrows A8 to A10 in the same drawing, the gas that flows into the branched pipe portion 44 flows through the bent passage 44a and is then divided into the first branched passage 44b and the second branched passage 44c, and the divided gas flows into the surge tank 38 (also see arrows A9 to A10 in Fig. 13 to Fig. 14). The gas that flows into the surge tank 38 is suctioned into each of the cylinders 11 via the independent passages 39.

On the contrary, during the supercharging, the gas that flows reversely from the surge tank 38 to the bypass passage 40 flows through each of the portions 41 to 44 in the bypass passage 40 in a reverse direction and flows into the first passage 33.

### (Configuration Relating to Blowing Back of Gas)

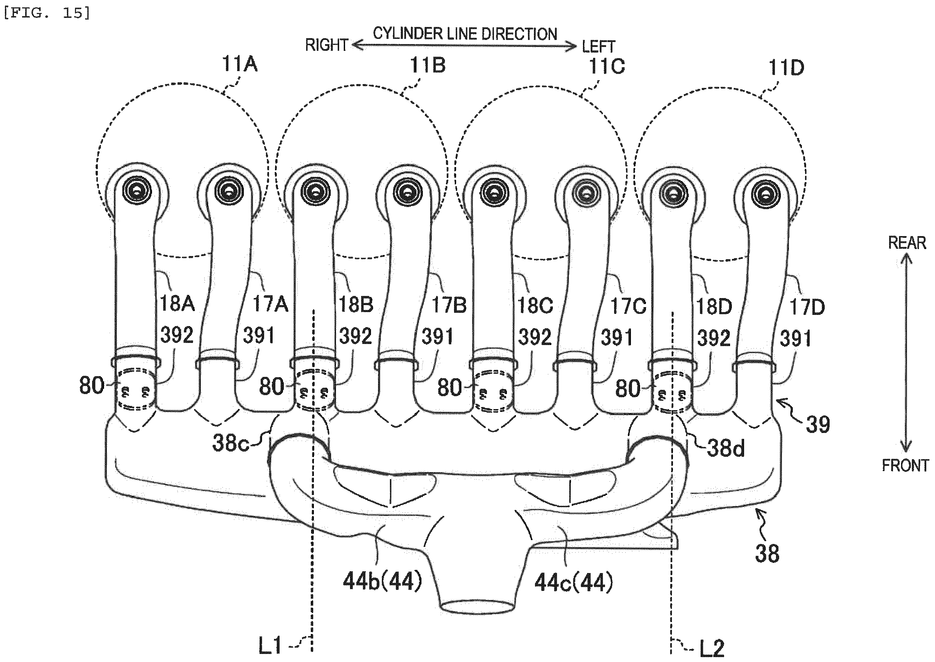

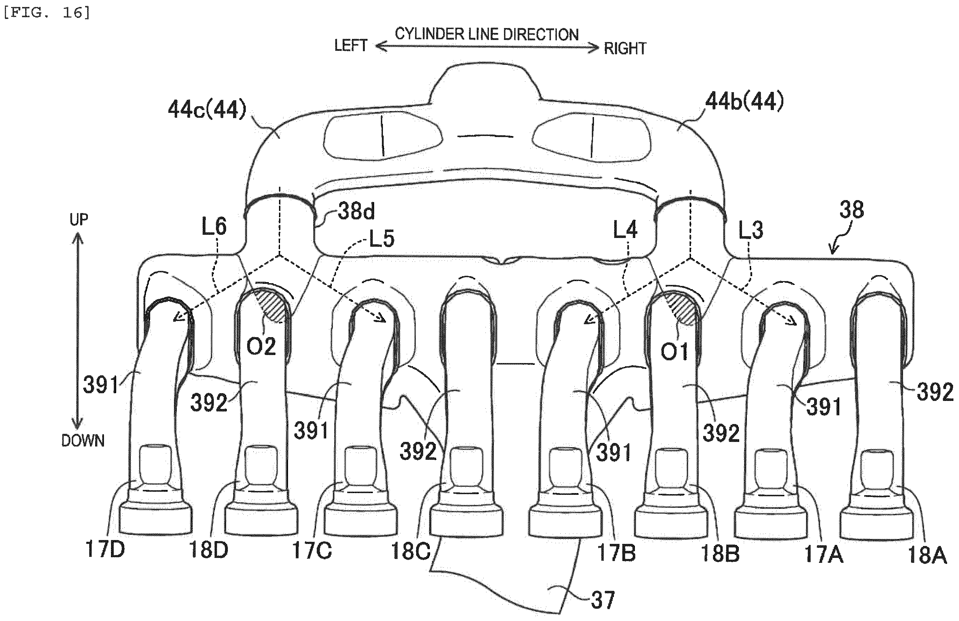

Fig. 15 is a plan view of a channel structure around the surge tank 38 that is seen from above, and Fig. 16 is a rear view of the channel structure that is seen from the rear. Both of Fig. 15 and Fig. 16 correspond to a shape of a core at the time when the members around the surge tank 38 are cast.

The engine 1 includes the ECU for operating said engine 1. Based on detection signals output from various sensors, the ECU determines an operation state of the engine 1 and calculates a control amount of each of various actuators. Then, the ECU outputs a control signal that corresponds to the calculated control amount to the injector 6, the ignition plug 25, the electric intake VVT 23, the electric exhaust VVT 24, the fuel supply system 61, the throttle valve 32, the EGR valve 54, the electromagnetic clutch 34a of the supercharger 34, and the bypass valve 41 so as to operate the engine 1.

An operation region of the engine 1 is sectioned by an engine speed and a load, for example. The ECU controls each of the actuators to realize the operation state suited for each of the regions.

For example, in the operation region on a lower-load side than a specified load (hereinafter referred to as a "fuel economy region"), the engine 1 is operated by the natural aspiration. Meanwhile, in the operation region on a higher-load side than the specified load (hereinafter referred to as a "supercharged region"), the gas that is introduced into each of the cylinders 11 is supercharged by driving the supercharger 34.

In addition, in the fuel economy region, the ECU closes the SCV 80 to promote swirls. In this way, the flow rate of the gas flowing through the first port 17 is increased, so as to be able to promote mixing of the gas. Meanwhile, in the supercharged region, in order to secure the introduction amount of the gas, the ECU gradually opens the SCV 80 as the load on the engine 1 is increased.

By the way, in such an engine 1, from perspectives of securing an in-cylinder temperature, a reduction in pump loss, and the like, for example, it is considered to provide a negative overlapping period (NVO) in the above-described fuel economy region via the internal EGR system.

More specifically, in the fuel economy region, the electric exhaust VVT 24 holds closing timing of the exhaust valve 22 (hereinafter referred to as "EVC") at a specified crank angle before exhaust top dead center according to the control signal received from the ECU. The EVC is adjusted by the electric exhaust WT. Thus, when the EVC is held to be substantially constant, EVO is also held to be substantially constant. In this way, the electric exhaust VVT 24 sets the EVC in an exhaust stroke.

Meanwhile, in the fuel economy region, the electric intake VVT 23 sets opening timing of the intake valve 21 (hereinafter referred to as "IVO") at a specified crank angle after the exhaust top dead center according to the control signal received from the ECU. Thus, in this fuel economy region, the negative overlapping period, in which both of the intake valve 21 and the exhaust valve 22 are closed across the exhaust top dead center, is provided.

Note that, in this engine 1, the electric intake VVT 23 sets the IVC at timing between an early period and a middle period in a compression stroke. That is, in this engine 1, so-called "delayed closing" of the intake valve 21 can be performed. A filling amount of the gas can be reduced by performing the delayed closing.

By providing the negative overlapping period, the burnt gas is trapped in the combustion chamber 16 (that is, the internal EGR gas is introduced). As a result, a temperature of the inside of the combustion chamber 16, in particular, the temperature before ignition is increased. In this way, the combustion can stably be performed when compression ignited combustion is performed instead of general spark-ignited combustion, so as to improve fuel economy performance. In addition, since the IVC is delayed, the filling amount of the gas is reduced. The filling amount is reduced in the fuel economy region. However, since a mirror cycle can be realized in conjunction with the provision of the negative overlapping period, throttling can be skipped or suppressed. As a result, the pump loss is reduced.

By the way, in the case where such control is executed, the intake valve 21 remains to be opened immediately after an intake stroke is shifted to the compression stroke. As a result, along with lifting of the piston 14, the internal EGR gas, which is introduced into the cylinder 11, is blown back to the intake side.

In particular, as in the embodiment, in the case where the surge tank 38 is disposed near the inlets of the intake ports 17, 18, the gas, which is blown back to the intake side, possibly flows reversely to the surge tank 38 via the intake ports 17, 18 and the independent passages 391, 392.

As a result of the earnest investigation, the present inventors and the like have found that a difference in an in-cylinder state possibly occurs among the cylinders due to the gas that is blown back to the surge tank 38.

More specifically, for example, in a case of a four-cylinder engine, it is possible to disperse the gas, which is blown back from the cylinder 11 positioned on the inner side in the cylinder array direction such as the second cylinder 11B or the third cylinder 11C, to both of the left and right sides in the cylinder array direction. However, the gas, which is blown back from the cylinder 11 positioned at each of the ends in the cylinder array direction such as the first cylinder 11A or the fourth cylinder 11D, cannot be dispersed sufficiently because the gas can only flow toward one of the left and right sides in the cylinder array direction.

Thus, in the surge tank 38, the gas, which is blown back, is more likely to be accumulated in a space near the upstream end portion of the independent passage 39, which is connected to the first cylinder 11A or the fourth cylinder 11D, than in a space near the upstream end portion of the independent passage 39, which is connected to the second cylinder 11B or the third cylinder 11C.

As a result, differences in an introduction amount of the fresh air and a ratio of the internal EGR gas to the fresh air occur between the cylinders 11C, 11B positioned on the inner side in the cylinder array direction and the cylinders 11A, 11D positioned at both of the ends in the cylinder array direction. Such a circumstance is not preferred from a perspective of keeping the uniform in-cylinder state.

As a result of the further investigation, the present inventors and the like have noticed that there is room for improvement in the connected position between each of the first and second branched passages 44b, 44c and the surge tank 38 so as to reduce the difference in the in-cylinder state among the cylinders.

The engine 1 is configured by reflecting such findings.

More specifically, as illustrated in Fig. 15 to Fig. 16, the first and second branched passages 44b, 44c are connected to the surge tank 38 with a space being interposed therebetween in the cylinder array direction. When the surge tank 38 is seen in the cylinder axis direction, the first and second branched passages 44b, 44c are connected to the surge tank 38 on extension lines L1, L2, each of which extends from the upstream end portion of the independent passage 39 connected to the second port 18 as the SCV port to an opposite side to the first cylinder 11A to the fourth cylinder 11D, respectively.

In detail, as illustrated in Fig. 15, the first branched passage 44b is connected to the surge tank 38 on the first extension line L1 that extends from the upstream end portion of the independent passage 392 connected to the second port 18B of the second cylinder 11B, in which the second port 18 is arranged on the outer side in the cylinder array direction, of the second cylinder 11B and the third cylinder 11C to the opposite side to the first cylinder 11A to the fourth cylinder 11D.

Further in detail, as illustrated in Fig. 16, when the air intake passage 30 is seen from the rear in plan view, the downstream end portion of the first branched passage 44b is disposed in a manner to mutually overlap the upstream end portion of the independent passage 392 connected to the second port 18B of the second cylinder 11B (see a region O1 in Fig. 16). Then, as indicated by chain lines L3 to L4, a channel length L3 from the downstream end portion of the first branched passage 44b to the upstream end portion of the independent passage 391 connected to the first port 17A of the first cylinder 11A is set to be substantially the same as a channel length L4 from said downstream end portion to the upstream end portion of the independent passage 391 connected to the first port 17B of the second cylinder 11B.

Similarly, as illustrated in Fig. 15, the second branched passage 44c is connected to the surge tank 38 on the second extension line L2 that extends from the upstream end portion of the independent passage 392 connected to the second port 18D of the fourth cylinder 11D, in which the second port 18 is arranged on the inner side in the cylinder array direction, of the first cylinder 11A and the fourth cylinder 11D to the opposite side to the first cylinder 11A to the fourth cylinder 11D.

Further in detail, as illustrated in Fig. 16, when the air intake passage 30 is seen from the rear in plan view, the downstream end portion of the second branched passage 44c is disposed in a manner to mutually overlap the upstream end portion of the independent passage 392 connected to the second port 18D of the fourth cylinder 11D (see a region O2 in Fig. 16). Then, as indicated by chain lines L5 to L6, a channel length L5 from the downstream end portion of the second branched passage 44b to the upstream end portion of the independent passage 391 connected to the first port 17C of the third cylinder 11C is set to be substantially the same as a channel length L6 from said downstream end portion to the upstream end portion of the independent passage 391 connected to the first port 17D of the fourth cylinder 11D.

Just as described, the first and second branched passages 44b, 44c are connected with the space being interposed therebetween in the cylinder array direction. Thus, for example, compared to a configuration that the single branched passage is connected to a central portion of the surge tank 38 in the cylinder array direction, the fresh air can be introduced to the inner side and the end sides of the surge tank 38 in a well-balanced manner. In addition, the gas, which is accumulated on the end sides, can also be pushed away by the introduced fresh air.

Furthermore, as described above, when the surge tank 38 is seen in the cylinder axis direction, the connected position between each of the branched passages 44b, 44c and the surge tank 38 is arranged on corresponding one of the first and second extension lines L1, L2, each of which extends from the upstream end portion of the independent passage 392 connected to the second port 18 as the SCV port to the opposite side to each of the cylinders 11.

With such arrangement, the gas, which is introduced into the surge tank 38 from each of the branched passages 44b, 44c, attempts to flow along corresponding one of the above-described extension lines L1, L2. However, since the SCV 80, which is closed in the fuel economy region, serves as a wall, the gas is suctioned into the first ports 17, each of which is positioned adjacent to the SCV port 18. Accordingly, for example, differing from a configuration of the connection on the extension line from the first port 17, the fresh air does not directly flow into the first port 17. As a result, the channel length from each of the branched passages 44b, 44c to each of the cylinders 11 can be set to be substantially the same among the cylinders. Therefore, it is possible to reduce the introduction amount of the gas and the difference in the in-cylinder state among the cylinders.

As described above, the first branched passage 44b is arranged on the first extension line L1 relating to the second port 18B of the second cylinder 11B. In this case, in the fuel economy region, the gas, which is introduced into the surge tank 38 from the first branched passage 44b, collides with the SCV 80, which closes the second port 18B of the second cylinder 11B, and is thereafter mainly suctioned into the first port 17B of the second cylinder 11B and the first port 17A of the first cylinder 11A. Meanwhile, the gas, which is introduced into the surge tank 38 from the second branched passage 44c, is mainly suctioned into the first ports 17C, 17D of the third cylinder 11C and the fourth cylinder 11D.

Here, it is considered that the first port 17B of the second cylinder 11B and the first port 17A of the first cylinder 11A are adjacent to each other with the second port 18B of the second cylinder 11B being interposed therebetween. In such a case, when the first branched passage 44b is arranged on the extension line L1 relating to the second port 18B of the second cylinder 11B, it is possible to reduce the difference between the channel length L3 from the first branched passage 44b to the first port 17A of the first cylinder 11A and the channel length L4 from the first branched passage 44b to the first port 17B of the second cylinder 11B, and thus to set the channel length L3 and the channel length L4 to be substantially the same. The same applies to the second branched passage 44c.

As described above, since the first port 17 and the second port 18 are aligned in the same order in each of the cylinders 11, it is possible for all of the four cylinders 11 to have the same attachment structure of components such as the injector 6 and the ignition plug 25.

In the low-load to mid-load operation regions including the above-described fuel economy region, an influence of blowing back of the gas becomes relatively significant due to the small introduction amount of the fresh air. In such operation regions, the natural aspiration by the bypass passage 40 is achieved. Thus, when the bypass passage 40 is constructed of the first and second branched passages 44c, 44d described above, it is possible to reduce the difference in the in-cylinder state among the cylinders, which is caused by blowing back of the gas.

On the contrary, in the high-load operation region, the influence of blowing back of the gas becomes relatively small due to the large introduction amount of the fresh air. In such an operation region, supercharging via the second passage 35, the third passage 37, and the like is achieved. Due to the small influence of blowing back of the gas, the second passage 35 and the third passage 37 can have a simple layout.

### <<Other Embodiments>>

In the embodiment, the inline four-cylinder engine has been exemplified. However, the configuration of the engine is not limited thereto. For example, the engine only has to be an engine having at least three cylinders, such as an inline-three engine or an inline-six engine. In addition, the number of the upstream passages may be changed according to the number of the cylinders.

In the embodiment, the description has been made on the configuration that the second port 18 and the first port 17 are aligned from the right side in the cylinder array direction in each of the cylinders 11. However, the invention is not limited to this configuration. For example, in each of the cylinders 11, the first port 17 and the second port 18 may be aligned reversely in the lateral direction (more specifically, while the first port 17 is arranged on the right side, the second port 18 is arranged on the left side).

In this case, when the arrangement of the second port 18 as the SCV port is considered, the first branched passage 44b is connected to the surge tank 38 on the extension line from the independent passage 392 connected not to the second cylinder 11B but to the third cylinder 11B, and the second branched passage 44c is connected to the surge tank 38 on the extension line from the independent passage 392 connected not to the fourth cylinder 11D but to the first cylinder 11A.

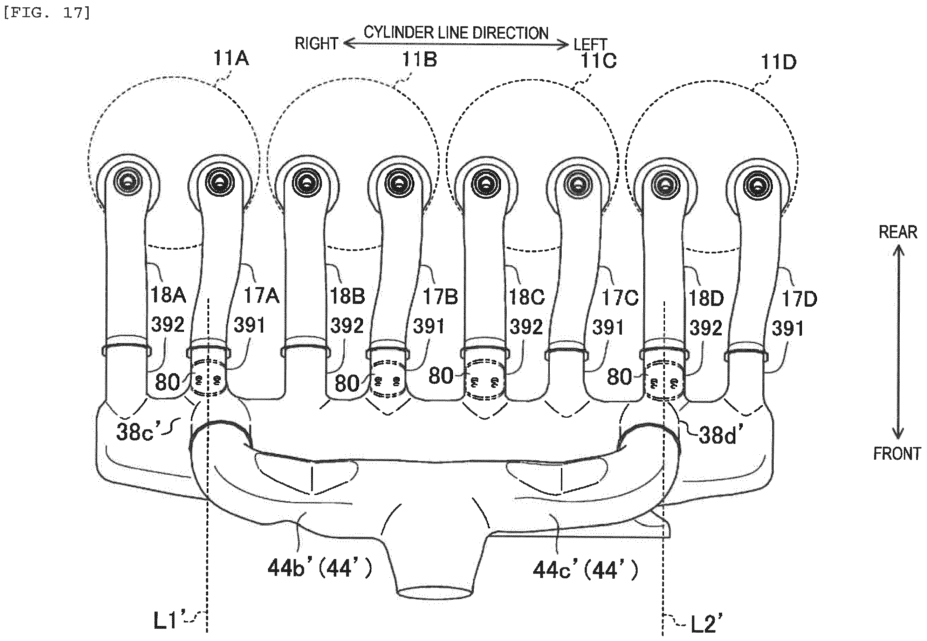

As another configuration example, as illustrated in Fig. 17, while the first port 17 and the second port 18 are arranged in alignment in this order in the first cylinder 11A and the second cylinder 11B, the second port 18 and the first port 17 are arranged in alignment in this order in the third cylinder 11C and the fourth cylinder 11D. That is, the alignment of the first port 17 and the second port 18 is laterally reversed between a combination of the first cylinder 11A and the second cylinder 11B and a combination of the third cylinder 11C and the fourth cylinder 11D.

In this case, as illustrated in Fig. 17, when the surge tank 38 is seen in the cylinder axis direction, in regard to first and second branched passages 44b', 44c', while the first branched passage 44b' is connected to the surge tank 38 on a first extension line L1' from the upstream end portion of the independent passage 392 connected to the second port 18A corresponding to the first cylinder 11A to the opposite side to each of the cylinders 11, the second branched passage 44c' may be connected to the surge tank 38 on a second extension line L2' from the upstream end portion of the independent passage 392 connected to the second port 18D corresponding to the fourth cylinder 11D to the opposite side to each of the cylinders 11.

According to this configuration, in the fuel economy region, the gas, which is introduced into the surge tank 38 from the first branched passage 44b', collides with the SCV 80, which closes the second port 18A of the first cylinder 11A, and is thereafter mainly suctioned into the first port 17A of the first cylinder 11A and the first port 17B of the second cylinder 11B. Meanwhile, the gas, which is introduced into the surge tank 38 from the second branched passage 44c', is mainly suctioned into the first ports 17C, 17D of the third cylinder 11C and the fourth cylinder 11D.

According to this configuration, the first port 17B of the second cylinder 11B and the first port 17A of the first cylinder 11A are adjacent to each other with the second port 18A of the first cylinder 11A being interposed therebetween. In such a case, when the first branched passage 44b' is arranged on the extension line L1' relating to the second port 18A thereof, it is possible to reduce a difference between a channel length from the first branched passage 44b' to the first port 17A of the first cylinder 11A and a channel length from the first branched passage 44b' to the first port 17B of the second cylinder 11B. The same applies to the second branched passage 44c'.

In addition, connected portions between the surge tank 38 and the first and second branched passages 44b', 44c' are symmetrical about the center portion of the surge tank 38 in the cylinder array direction. Thus, it is possible to suppress variations in the in-cylinder state between the side of the first cylinder 11A and the second cylinder 11B and the side of the third cylinder 11C and the fourth cylinder 11D.

### Reference Signs List

1: Engine (multi-cylinder engine)
11: Cylinder (cylinder)
11A: First cylinder
11B: Second cylinder
11C: Third cylinder
11D: Fourth cylinder
17: First port (intake port)
18: Second port (intake port, SCV port)
19: Exhaust port
21: Intake valve
22: Exhaust valve
23: Electric intake VVT (variable valve mechanism)
24: Electric exhaust VVT (variable valve mechanism)
30: Air intake passage
34: Supercharger (supercharging passage)
35: Second passage (supercharging passage)
36: Intercooler (supercharging passage)
37: Third passage (supercharging passage)
38: Surge tank
38b: Introduction port
39: Independent passage
40: Bypass passage
44b: First branched passage (upstream passage, first upstream passage)
44c: Second upstream passage (upstream passage, second upstream passage)
80: Swirl control valve
L1: First extension line (extension line)
L2: Second extension line (extension line)

## Claims

1. A multi-cylinder engine (1) comprising:
at least three or more of plural cylinders (11A, 11B, 11C, 11D) that are arranged in an array;
plural intake ports (17A to 18D) that respectively communicate with the plural cylinders (11A, 11B, 11C, 11D); and
an air intake passage (30) that is connected to each of the plural intake ports (17A to 18D),
**characterized in that**
for each of the plural cylinders (11A, 11B, 11C, 11D), the plural intake ports (17A to 18D) include an SCV port that is configured to reduce a flow rate of flowing gas via a swirl control valve (80),
the air intake passage (30) has:
plural independent passages (39, 391, 392) that are respectively connected to the plural intake ports (17A to 18D);
a surge tank (38), to which upstream end portions of the plural independent passages (39, 391, 392) are connected so as to be arranged in line according to an alignment order of the corresponding cylinders (11A, 11B, 11C, 11D); and
plural upstream passages (44b, 44c), a downstream end portion of each of which is connected to the surge tank (38), and each of which introduces the gas into said surge tank (38), and
the plural upstream passages (44b, 44c) are arranged with a space being interposed therebetween in a cylinder array direction, and, when the surge tank (38) is seen in a cylinder axis direction, the plural upstream passages (44b, 44c) are connected to the surge tank (38) on extension lines (L1, L2; L1', L2'), each of which extends from the upstream end portion of the independent passage (391, 392) connected to the SCV port (17A, 18B, 18D) to an opposite side to the plural cylinders (11A, 11B, 11C, 11D).

2. The multi-cylinder engine (1) according to claim 1, wherein
the multi-cylinder engine (1) is configured as an inline four-cylinder engine in which the plural intake ports (17A to 18D) provided for each of the plural cylinders (11A, 11B, 11C, 11D) are two,
for each of the plural cylinders (11A, 11B, 11C, 11D), the plural intake ports (17A to 18D) include a first port (17A, 17B, 17C, 17D) and a second port (18A, 18B, 18C, 18D) that is adjacent to said first port (17A, 17B, 17C, 17D) in the cylinder array direction and is configured as the SCV port,
in the case where the plural cylinders (11A, 11B, 11C, 11D) are referred to as a first cylinder (11A), a second cylinder (11B), a third cylinder (11C), and a fourth cylinder (11D) from one side in the cylinder array direction, the first port (17) and the second port are arranged in alignment in the same order in any of the first cylinder (11A), the second cylinder (11B), the third cylinder (11C), and the fourth cylinder (11D),
when the surge tank (38) is seen in the cylinder axis direction, the plural upstream passages (44b, 44c) have:
a first upstream passage (44b) connected to the surge tank (38) on the extension line (L1) that extends from the upstream end portion of the independent passage (392) connected to the second port (18B) of one of the second cylinder (11B) and the third cylinder (11C), in which said second port (18B) is arranged on an outer side in the cylinder array direction, to the opposite side to the plural cylinders (11A, 11B, 11C, 11D); and
a second upstream passage (44c) connected to the surge tank (38) on the extension line (L2) that extends from the upstream end portion of the independent passage (392) connected to the second port (18D) of one of the first cylinder (11A) and the fourth cylinder (11D), in which said second port is arranged on an inner side in the cylinder array direction, to the opposite side to the plural cylinders (11A, 11B, 11C, 11D).

3. The multi-cylinder engine (1) according to claim 1, wherein
the multi-cylinder engine (1) is configured as an inline four-cylinder engine in which the plural intake ports (17A to 18D) provided for each of the plural cylinders (11A, 11B, 11C, 11D) are two,
for each of the plural cylinders (11A, 11B, 11C, 11D), the plural intake ports (17A to 18D) include a first port (17C, 17D, 18A, 18B) and a second port (17A, 17B, 18C, 18D) that is adjacent to said first port (17C, 17D, 18A, 18B) in the cylinder array direction and is configured as the SCV port,
in the case where the plural cylinders (11A, 11B, 11C, 11D) are referred to as a first cylinder (11A), a second cylinder (11B), a third cylinder (11C), and a fourth cylinder (11D) from one side in the cylinder array direction, while the first port (18A, 18B) and the second port (17A, 17B) are arranged in alignment in an order of the first port (18A, 18B) and the second port (17A, 17B) in the first cylinder (11A) and the second cylinder (11B), the first port (17C, 17D) and the second port (18C, 18D) are arranged in alignment in an order of the second port (18C, 18D) and the first port (17C, 17D) in the third cylinder (11C) and the fourth cylinder (11D),
when the surge tank (38) is seen in the cylinder axis direction, the plural upstream passages (44b, 44c) have:
a first upstream passage (44b) connected to the surge tank (38) on the extension line (L1') that extends from the upstream end portion of the independent passage (391) connected to the second port (17A) corresponding to the first cylinder (11A) to the opposite side to the plural cylinders (11A, 11B, 11C, 11D); and
a second upstream passage (44c) connected to the surge tank (38) on the extension line (L2') that extends from the upstream end portion of the independent passage (392) connected to the second port (18D) corresponding to the fourth cylinder (11D) to the opposite side to the plural cylinders (11A, 11B, 11C, 11D).

4. The multi-cylinder engine (1) according to any one of claims 1 to 3, wherein
the multi-cylinder engine (1) further includes:
plural intake valves (21) that respectively open/close the plural intake ports (17A to 18D);
plural exhaust ports (19) that respectively communicate with the plural cylinders (11A, 11B, 11C, 11D);
plural exhaust valves (22) that respectively open/close the plural exhaust ports (19); and
a variable valve mechanism (23, 24) that changes valve opening timing and valve closing timing of at least one of the intake valve (21) and the exhaust valve (22), and
the variable valve mechanism (23, 24) is configured to provide a negative overlapping period, in which both of the intake valve (21) and the exhaust valve (22) are closed across exhaust top dead center, and set the valve closing timing of the plural intake valves (21) in a compression stroke when an operation state of the multi-cylinder engine (1) is in a specified operation region.

5. The multi-cylinder engine (1) according to any one of claims 1 to 4, wherein
the multi-cylinder engine (1) includes a supercharger (34) configured to supercharge the gas to be introduced into each of the plural cylinders (11A, 11B, 11C, 11D) in the operation region on a higher-load side than a specified load,
the air intake passage (30) has a supercharging passage, in which the supercharger (34) is provided, and a downstream end portion of which is connected to the surge tank (38) via an introduction port,
the introduction port is opened to a central portion of the surge tank (38) in the cylinder array direction, and is formed to have a larger diameter than the intake port (17A to 18D),
the air intake passage (30) is provided with a bypass passage (40) that bypasses the supercharger (34) and reaches the surge tank (38) when the operation state of the multi-cylinder engine (1) is in the operation region on a lower-load side than the specified load, and
the plural upstream passages (44b, 44c) constitute the bypass passage (40).

## Patentansprüche

1. Mehrzylindermotor (1), umfassend:
zumindest drei oder mehr von mehreren Zylindern (11A, 11B, 11C, 11D), die in einer Anordnung angeordnet sind;
mehrere Einlass- bzw. Ansaugöffnungen (17A bis 18D), die jeweils mit den mehreren Zylindern (11A, 11B, 11C, 11D) kommunizieren; und
einen Lufteinlass- bzw. -ansaugtrakt (30), der mit jeder der mehreren Einlassöffnungen (17A bis 18D) verbunden ist,
**dadurch gekennzeichnet, dass**
für jeden der mehreren Zylinder (11A, 11B, 11C, 11D) die mehreren Einlassöffnungen (17A bis 18D) eine SCV-Öffnung enthalten, die konfiguriert ist, eine Strömungsrate von strömendem Gas über ein Wirbelsteuer- bzw. - regelventil (80) zu reduzieren,
wobei der Lufteinlasstrakt (30) aufweist:
mehrere unabhängige Trakte (39, 391, 392), die jeweils mit den mehreren Einlassöffnungen (17A bis 18D) verbunden sind;
einen Ausgleichstank (38), mit dem stromaufwärtige Endabschnitte der mehreren unabhängigen Trakte (39, 391, 392) verbunden sind, um gemäß einer Ausrichtungsreihenfolge der entsprechenden Zylinder (11A, 11B, 11C, 11D) in Reihe angeordnet zu sein; und
mehrere stromaufwärtige Trakte (44b, 44c), von denen jeweils ein stromabwärtiger Endabschnitt mit dem Ausgleichstank (38) verbunden ist und von denen jeder das Gas in den Ausgleichstank (38) einbringt, und
die mehreren stromaufwärtigen Durchgänge (44b, 44c) so angeordnet sind, dass ein Raum dazwischen in einer Zylinderanordnungsrichtung angeordnet ist, und wenn der Ausgleichstank (38) in einer Zylinderachsenrichtung gesehen wird, die mehreren stromaufwärtigen Trakte (44b, 44c) mit dem Ausgleichstank (38) an bzw. auf Verlängerungsleitungen (L1, L2; L1' L2') verbunden sind, die sich jeweils von dem stromaufwärtigen Endabschnitt des unabhängigen Trakts (391, 392), der mit der SCV-Öffnung (17A, 18B, 18D) verbunden ist, zu einer gegenüberliegenden bzw. entgegengesetzten Seite zu den mehreren Zylindern (11A, 11B, 11C, 11D) erstrecken.

2. Mehrzylindermotor (1) nach Anspruch 1, wobei
der Mehrzylindermotor (1) als ein Reihenvierzylindermotor konfiguriert ist, bei dem die mehreren Einlassöffnungen (17A bis 18D), die für jeden der mehreren Zylinder (11A, 11B, 11C, 11D) bereitgestellt sind, zwei sind,
für jeden der mehreren Zylinder (11A, 11B, 11C, 11D) die mehreren Einlassöffnungen (17A bis 18D) eine erste Öffnung (17A, 17B, 17C, 17D) und eine zweite Öffnung (18A, 18B, 18C, 18D) enthalten, die zu der ersten Öffnung (17A, 17B, 17C, 17D) in der Zylinderanordnungsrichtung benachbart bzw. entgegengesetzt ist und als SCV-Öffnung konfiguriert ist,
in dem Fall, in dem die mehreren Zylinder (11A, 11B, 11C, 11D) als ein erster Zylinder (11A), ein zweiter Zylinder (11B), ein dritter Zylinder (11C) und ein vierter Zylinder (11D) von einer Seite in der Zylinderanordnungsrichtung bezeichnet werden, die erste Öffnung (17) und die zweite Öffnung in Ausrichtung in derselben Reihenfolge in einem des ersten Zylinders (11A), des zweiten Zylinders (11B), des dritten Zylinders (11C) und des vierten Zylinders (11D) angeordnet sind,
wenn der Ausgleichstank (38) in der Zylinderachsenrichtung gesehen wird, die mehreren stromaufwärtigen Trakte (44b, 44c) aufweisen:
einen ersten stromaufwärtigen Trakt (44b), der mit dem Ausgleichstank (38) an der Verlängerungsleitung (L1) verbunden ist, die sich von dem stromaufwärtigen Endabschnitt des unabhängigen Trakts (392) erstreckt, der mit der zweiten Öffnung (18B) eines des zweiten Zylinders (11B) und des dritten Zylinders (11C) verbunden ist, wobei die zweite Öffnung (18B) an einer Außenseite in der Zylinderanordnungsrichtung zu der gegenüberliegenden bzw. entgegengesetzten Seite zu den mehreren Zylindern (11A, 11B, 11C, 11D) angeordnet ist; und
einen zweiten stromaufwärtigen Trakt (44c), der mit dem Ausgleichstank (38) an der Verlängerungsleitung (L2) verbunden ist, die sich von dem stromaufwärtigen Endabschnitt des unabhängigen Trakts (392) erstreckt, der mit der zweiten Öffnung (18D) eines des ersten Zylinders (11A) und des vierten Zylinders (11D) verbunden ist, wobei die zweite Öffnung an einer Innenseite in der Zylinderanordnungsrichtung zu der gegenüberliegenden bzw. entgegengesetzten Seite zu den mehreren Zylindern (11A, 11B, 11C, 11D) angeordnet ist.

3. Mehrzylindermotor (1) nach Anspruch 1, wobei
der Mehrzylindermotor (1) als ein Reihenvierzylindermotor konfiguriert ist, bei dem die mehreren Einlassöffnungen (17A bis 18D), die für jeden der mehreren Zylinder (11A, 11B, 11C, 11D) bereitgestellt sind, zwei sind,
für jeden der mehreren Zylinder (11A, 11B, 11C, 11D) die mehreren Einlassöffnungen (17A bis 18D) eine erste Öffnung (17C, 17D, 18A, 18B) und eine zweite Öffnung (17A, 17B, 18C, 18D) enthalten, die der ersten Öffnung (17C, 17D, 18A, 18B) in der Zylinderanordnungsrichtung benachbart bzw. entgegengesetzt ist und als SCV-Öffnung konfiguriert ist,
in dem Fall, in dem die mehreren Zylinder (11A, 11B, 11C, 11D) als ein erster Zylinder (11A), ein zweiter Zylinder (11B), ein dritter Zylinder (11C) und ein vierter Zylinder (11D) von einer Seite in der Zylinderanordnungsrichtung bezeichnet werden, während die erste Öffnung (18A, 18B) und die zweite Öffnung (17A, 17B) in Ausrichtung in einer Reihenfolge der ersten Öffnung (18A, 18B) und der zweiten Öffnung (17A, 17B) in dem ersten Zylinder (11A) und dem zweiten Zylinder (11B) angeordnet sind, die erste Öffnung (17C, 17D) und die zweite Öffnung (18C, 18D) in Ausrichtung einer Reihenfolge der zweiten Öffnung (18C, 18D) und der ersten Öffnung (17C, 17D) in dem dritten Zylinder (11C) und dem vierten Zylinder (11D) angeordnet sind,
wenn der Ausgleichstank (38) in der Zylinderachsenrichtung gesehen wird, die mehreren stromaufwärtigen Trakte (44b, 44c) aufweisen:
einen ersten stromaufwärtigen Trakt (44b), der mit dem Ausgleichstank (38) an der Verlängerungsleitung (L1') verbunden ist, die sich von dem stromaufwärtigen Endabschnitt des unabhängigen Trakts (391), der mit dem zweiten Anschluss (17A) entsprechend dem ersten Zylinder (11A) verbunden ist, zu der gegenüberliegenden bzw. entgegengesetzten Seite zu den mehreren Zylindern (11A, 11B, 11C, 11D) erstreckt; und
einen zweiten stromaufwärtigen Trakt (44c), der mit dem Ausgleichstank (38) an der Verlängerungsleitung (L2') verbunden ist, die sich von dem stromaufwärtigen Endabschnitt des unabhängigen Trakts (392), der mit der zweiten Öffnung (18D) entsprechend dem vierten Zylinder (11D) verbunden ist, zu der gegenüberliegenden bzw. entgegengesetzten Seite zu den mehreren Zylindern (11A, 11B, 11C, 11D) erstreckt.

4. Mehrzylindermotor (1) nach einem der Ansprüche 1 bis 3, wobei der Mehrzylindermotor (1) ferner enthält:
mehrere Einlass- bzw. Ansaugventile (21), die jeweils die mehreren Einlassöffnungen (17A bis 18D) öffnen/schließen;
mehrere Auslassöffnungen (19), die jeweils mit den mehreren Zylindern (11A, 11B, 11C, 11D) kommunizieren;
mehrere Auslassventile (22), die jeweils die mehreren Auslassöffnungen (19) öffnen/schließen; und
einen variablen Ventilmechanismus (23, 24), der einen Ventilöffnungszeitpunkt und Ventilschließzeitpunkt von zumindest einem des Einlassventils (21) und des Auslassventils (22) ändert, und
der variable Ventilmechanismus (23, 24) konfiguriert ist, eine negative Überlappungsperiode bereitzustellen, in der sowohl das Einlassventil (21) als auch das Auslassventil (22) über einem oberen Auslasstotpunkt geschlossen sind,
und den Ventilschließzeitpunkt der mehreren Einlassventile (21) in einem Verdichtungshub festzulegen bzw. einzustellen, wenn sich ein Betriebszustand des Mehrzylindermotors (1) in einem spezifizierten Betriebsbereich befindet.

5. Mehrzylindermotor (1) nach einem der Ansprüche 1 bis 4, wobei
der Mehrzylindermotor (1) einen Lader (34) enthält, der konfiguriert ist, das Gas aufzuladen, das in jeden der mehreren Zylinder (11A, 11B, 11C, 11D) in dem Betriebsbereich auf einer Seite höherer Last als eine spezifizierte Last einzubringen ist,
der Lufteinlasstrakt (30) einen Ladetrakt aufweist, in dem der Lader (34) bereitgestellt ist, und von dem ein stromabwärtiger Endabschnitt mit dem Ausgleichstank (38) über eine Einbringungsöffnung verbunden ist;
die Einbringungsöffnung zu einem zentralen Abschnitt des Ausgleichstanks (38) in der Zylinderanordnungsrichtung geöffnet ist und dahingehend ausgebildet ist, einen größeren Durchmesser aufzuweisen als die Einlassöffnung (17A bis 18D),
der Lufteinlasstrakt (30) mit einem Bypasstrakt (40) versehen ist, der den Lader (34) umgeht und den Ausgleichstank (38) erreicht, wenn sich der Betriebszustand des Mehrzylindermotors (1) in dem Betriebsbereich auf einer Seite niedrigerer Last als der spezifizierten Last befindet, und
die mehreren stromaufwärtigen Trakte (44b, 44c) den Bypasstrakt (40) darstellen.

## Revendications

1. Moteur multicylindre (1) comprenant :
au moins trois ou plus d'une pluralité de cylindres (11A, 11B, 11C, 11D) qui sont agencés en série ;
une pluralité d'orifices d'admission (17A à 18D) qui communiquent respectivement avec la pluralité de cylindres (11A, 11B, 11C, 11D) ; et
un passage d'admission d'air (30) qui est connecté à chacun de la pluralité d'orifices d'admission (17A à 18D),
**caractérisé en ce que**
pour chacun de la pluralité de cylindres (11A, 11B, 11C, 11D), la pluralité d'orifices d'admission (17A à 18D) incluent un port SCV qui est configuré pour réduire un débit de gaz d'écoulement par le biais d'une soupape de commande de turbulence (80),
le passage d'admission d'air (30) a :
une pluralité de passages indépendants (39, 391, 392) qui sont respectivement connectés à la pluralité d'orifices d'admission (17A à 18D) ;
un réservoir d'équilibre (38) auquel des portions d'extrémité amont de la pluralité de passages indépendants (39, 391, 392) sont connectées de manière à être agencées en ligne conformément à un ordre d'alignement des cylindres correspondants (11A, 11B, 11C, 11D) ; et
une pluralité de passages amont (44b, 44c) dont une portion d'extrémité aval de chacun est connectée au réservoir d'équilibre (38) et dont chacun introduit le gaz dans ledit réservoir d'équilibre (38), et
la pluralité de passages amont (44b, 44c) sont agencés avec un espace qui est interposé entre eux dans une direction de série de cylindres, et, lorsque le réservoir d'équilibre (38) est vu dans une direction d'axe de cylindre, la pluralité de passages amont (44b, 44c) sont connectés au réservoir d'équilibre (38) sur des lignes de prolongement (L1, L2 ; L1', L2') dont chacune s'étend de la portion d'extrémité amont du passage indépendant (391, 392) connecté au port SCV (17A, 18B, 18D) à un côté opposé à la pluralité de cylindres (11A, 11B, 11C, 11D).

2. Moteur multicylindre (1) selon la revendication 1, dans lequel le moteur multicylindre (1) est configuré en tant que moteur à quatre cylindres en ligne dans lequel la pluralité d'orifices d'admission (17A à 18D) prévus pour chacun de la pluralité de cylindres (11A, 11B, 11C, 11D) sont deux, pour chacun de la pluralité de cylindres (11A, 11B, 11C, 11D), la pluralité d'orifices d'admission (17A à 18D) inclut un premier orifice (17A, 17B, 17C, 17D) et un second orifice (18A, 18B, 18C, 18D) qui est adjacent audit premier orifice (17A, 17B, 17C, 17D) dans la direction de série de cylindres et est configuré en tant qu'orifice SCV,
au cas où la pluralité de cylindres (11A, 11B, 11C, 11D) sont désignés par un premier cylindre (11A), un deuxième cylindre (11B), un troisième cylindre (11C) et un quatrième cylindre (11D) depuis un côté dans la direction de série de cylindres, le premier orifice (17) et le second orifice sont agencés en alignement dans le même ordre dans l'un quelconque du premier cylindre (11A), du deuxième cylindre (11B), du troisième cylindre (11C) et du quatrième cylindre (11D),
lorsque le réservoir d'équilibre (38) est vu dans la direction d'axe de cylindres, la pluralité de passages amont (44b, 44c) ont :
un premier passage amont (44b) connecté au réservoir d'équilibre (38) sur la ligne de prolongement (L1) qui s'étend de la portion d'extrémité amont du passage indépendant (392) connecté au second orifice (18B) d'un du deuxième cylindre (11B) et du troisième cylindre (11C), dans laquelle ledit second orifice (18B) est agencé sur un côté externe dans la direction de série de cylindres, au côté opposé à la pluralité de cylindres (11A, 11B, 11C, 11D) ; et
un second passage amont (44c) connecté au réservoir d'équilibre (38) sur la ligne de prolongement (L2) qui s'étend de la portion d'extrémité amont du passage indépendant (392) connecté au second orifice (18D) d'un du premier cylindre (11A) et du quatrième cylindre (11D), dans laquelle ledit second orifice est agencé sur un côté interne dans la direction de série de cylindres, au côté opposé à la pluralité de cylindres (11A, 11B, 11C, 11D).

3. Moteur multicylindre (1) selon la revendication 1, dans lequel
le moteur multicylindre (1) est configuré en tant que moteur à quatre cylindres en ligne dans lequel la pluralité d'orifices d'admission (17A à 18D) prévus pour chacun de la pluralité de cylindres (11A, 11B, 11C, 11D) sont deux, pour chacun de la pluralité de cylindres (11A, 11B, 11C, 11D), la pluralité d'orifices d'admission (17A à 18D) inclut un premier orifice (17C, 17D, 18A, 18B) et un second orifice (17A, 17B, 18C, 18D) qui est adjacent audit premier orifice (17C, 17D, 18A, 18B) dans la direction de série de cylindres et est configuré en tant qu'orifice SCV,
au cas où la pluralité de cylindres (11A, 11B, 11C, 11D) sont désignés par un premier cylindre (11A), un deuxième cylindre (11B), un troisième cylindre (11C) et un quatrième cylindre (11D) depuis un côté dans la direction de série de cylindres, tandis que le premier orifice (18A, 18B) et le second orifice (17A, 17B) sont agencés en alignement dans un ordre du premier orifice (18A, 18B) et du second orifice (17A, 17B) dans le premier cylindre (11A) et le deuxième cylindre (11B), le premier orifice (17C, 17D) et le second orifice (18C, 18D) sont agencés en alignement dans un ordre du second orifice (18C, 18D) et du premier orifice (17C, 17D) dans le troisième cylindre (11C) et le quatrième cylindre (11D),
lorsque le réservoir d'équilibre (38) est vu dans la direction d'axe de cylindres, la pluralité de passages amont (44b, 44c) ont :
un premier passage amont (44b) connecté au réservoir d'équilibre (38) sur la ligne de prolongement (L1') qui s'étend de la portion d'extrémité amont du passage indépendant (391) connecté au second orifice (17A) correspondant au premier cylindre (11A) au côté opposé à la pluralité de cylindres (11A, 11B, 11C, 11D) ; et
un second passage amont (44c) connecté au réservoir d'équilibre (38) sur la ligne de prolongement (L2') qui s'étend de la portion d'extrémité amont du passage indépendant (392) connecté au second orifice (18D) correspondant au quatrième cylindre (11D) au côté opposé à la pluralité de cylindres (11A, 11B, 11C, 11D).

4. Moteur multicylindre (1) selon l'une quelconque des revendications 1 à 3, dans lequel
le moteur multicylindre (1) inclut en outre :
une pluralité de soupapes d'admission (21) qui ouvrent/ferment respectivement la pluralité d'orifices d'admission (17A à 18D) ;
une pluralité d'orifices d'échappement (19) qui communiquent respectivement avec la pluralité de cylindres (11A, 11B, 11C, 11D) ;
une pluralité de soupapes d'échappement (22) qui ouvrent/ferment respectivement la pluralité d'orifices d'échappement (19) ; et
un mécanisme de soupape variable (23, 24) qui change un moment d'ouverture de soupape et un moment de fermeture de soupape d'au moins une de la soupape d'admission (21) et de la soupape d'échappement (22), et
le mécanisme de soupape variable (23, 24) est configuré pour fournir une période de chevauchement négative dans laquelle la soupape d'admission (21) et
la soupape d'échappement (22) sont toutes deux fermées en travers du point mort haut d'échappement, et régler le moment de fermeture de soupape de la pluralité de soupapes d'admission (21) dans une course de compression lorsqu'un état d'opération du moteur multicylindre (1) est dans une région d'opération spécifiée.

5. Moteur multicylindre (1) selon l'une quelconque des revendications 1 à 4, dans lequel
le moteur multicylindre (1) inclut un compresseur volumétrique (34) configuré pour suralimenter le gaz devant être introduit dans chacun de la pluralité de cylindres (11A, 11B, 11C, 11D) dans la région d'opération sur un côté de charge supérieure à une charge spécifiée,
le passage d'admission d'air (30) a un passage de suralimentation dans lequel le compresseur volumétrique (34) est prévu et dont une portion d'extrémité aval est connectée au réservoir d'équilibre (38) par le biais d'un orifice d'introduction, l'orifice d'introduction est ouvert vers une portion centrale du réservoir d'équilibre (38) dans la direction de série de cylindres, et est formé pour avoir un diamètre supérieur à l'orifice d'admission (17A à 18D),
le passage d'admission d'air (30) est pourvu d'un passage de dérivation (40) qui contourne le compresseur volumétrique (34) et atteint le réservoir d'équilibre (38) lorsque l'état d'opération du moteur multicylindre (1) est dans la région d'opération sur un côté de charge inférieure à la charge spécifiée, et
la pluralité de passages amont (44b, 44c) constituent le passage de dérivation (40).
